# EUROPÄISCHE PATENTSCHRIFT

(11) **EP 4 599 918 B1**
(45) Veröffentlichungstag und Bekanntmachung des Hinweises auf die Patenterteilung: **08.04.2026**
(21) Anmeldenummer: 24156537.3
(22) Anmeldetag: 08.02.2024
(51) Int. Cl.: B01D 53/00, B01D 53/22, B01D 53/26, B01D 53/047, B01D 53/30

(54) **KÜHLSCHRANKRECYCLINGANLAGE**
REFRIGERATOR RECYCLING SYSTEM
INSTALLATION DE RECYCLAGE DE RÉFRIGÉRATEUR

(43) Veröffentlichungstag der Anmeldung: 13.08.2025
(73) Patentinhaber: Andritz AG, 8045 Graz (AT); Borsig Membrane Technology GmbH, 45964 Gladbeck (DE)
(72) Erfinder: RUDOLPH, Michael, 09599 Freiberg (DE); HERBST, Martin, 46325 Borken (DE)
(74) Vertreter: Viering, Jentschura & Partner mbB Patent- und Rechtsanwälte

(56) Entgegenhaltungen:
- EP-A1- 1 473 071
- EP-A2- 0 329 962

## Beschreibung

Die Erfindung betrifft eine Kühlschrankrecyclinganlage.

Beim Recycling von Kühlschränken besteht ein Problem dahingehend, dass die in den Kühlschränken, z.B. in deren Dämmmaterial, das in der Regel aus mit Treibmittel/Treibgas geschäumtem Material gebildet ist, oder deren Kältekreislauf, enthaltenen, flüchtigen Kohlenwasserstoffe, wie z.B. FCKW und/oder Pentan, weitgehend wiedergewonnen werden sollen, um nicht in die Atmosphäre zu gelangen. Zudem soll das entsprechende Recycling aber auch energie- und kosteneffizient erfolgen.

Aus der EP 1 473 071 A1 sind eine Anlage sowie ein Verfahren zum Reinigen von Abgas, insbesondere eines Lösungsmittelenthaltenden Abgases, das vom Recycling von Kühlschränken stammt, bekannt, wobei folgende Schritte durchgeführt werden: kryogenisches Kondensieren des via Entfeuchter getrockneten, via Verdichter unter Druck stehenden Abgases, Separieren der kondensierten Komponenten von dem verbleibenden Abgas, Hindurchleiten des kalten, unter Druck stehenden, gereinigten Abgases durch einen Adsorber, um die verbleibenden, kondensierten Lösungsmittel zu adsorbieren, Spülen des Adsorbers mit einem erwärmten Gasstrom und Wiederaufbereiten des desorbierten Gases von dem Adsorber.

Demgemäß hat die Erfindung zum Ziel, eine Kühlschrankrecyclinganlage zu schaffen, mit welcher Kühlschränke in umweltgerechter Weise sowie energie- und kosteneffizient recycelbar sind.

Hierzu stellt die Erfindung eine Kühlschrankrecyclinganlage bereit, welche aufweist:
- eine Kühlschrankzerkleinerungseinrichtung, die eine abgedichtete Prozesskammer und eine in der Prozesskammer angeordnete, mechanische Zerkleinerungsvorrichtung zum mechanischen Zerkleinern eines, z.B. im Wesentlichen kompletten, Kühlschranks hat,
- eine Inertgas-Quelle, optional eine Stickstoffgas-Quelle, die an die Prozesskammer angeschlossen ist und von welcher der Prozesskammer Inertgas, optional Stickstoffgas, zuführbar ist,
- eine Entfeuchtungs-Kühlvorrichtung, die über eine Prozessgasleitung mit der Prozesskammer (z.B. dieser unmittelbar nachfolgend) verbunden ist, um aus der Prozesskammer abgeführtes Prozessgas, welches aus dem mechanischen Zerkleinern des Kühlschranks hervorgehendes Kohlenwasserstoffgas enthält, zu erhalten, und die eingerichtet ist, um das Prozessgas auf eine Entfeuchtungstemperatur, welche optional im Bereich von 5°-20° liegt, abzukühlen, sodass Wasser aus dem Prozessgas via Kondensation abgeschieden wird, um das Prozessgas zu entfeuchten,
- einen Verdichter, der stromabwärts von der Entfeuchtungs-Kühlvorrichtung in der Prozessgasleitung (z.B. der Entfeuchtungs-Kühlvorrichtung unmittelbar nachfolgend) angeordnet ist und der eingerichtet ist, um das entfeuchtete Prozessgas zu verdichten, optional auf einen Druck im Bereich von 10-15 bar,
- eine Kühleinrichtung, die stromabwärts von dem Verdichter in der Prozessgasleitung (z.B. dem Verdichter unmittelbar nachfolgend) angeordnet ist und die eingerichtet ist, um das verdichtete Prozessgas auf eine Abscheidungsbetriebstemperatur im Bereich von 5-15°C abzukühlen, um dadurch im Prozessgas enthaltenen Kohlenwasserstoff via Kondensation als flüssigen Kohlenwasserstoff abzuscheiden,
- eine Gas-Flüssigkeit-Trennvorrichtung, die stromabwärts von der Kühleinrichtung in der Prozessgasleitung (z.B. der Kühleinrichtung unmittelbar nachfolgend) angeordnet ist und die eingerichtet ist, um den aus dem verdichteten und abgekühlten Prozessgas abgeschiedenen, flüssigen Kohlenwasserstoff (welcher noch weitere flüssige Restfeuchte aufweisen kann und/oder aufweist) von dem verbleibenden Prozessgas zu trennen,
- eine Membranvorrichtung,
   - welche über eine Prozessgasrückführleitung mit der Gas-Flüssigkeit-Trennvorrichtung verbunden ist, um das verbleibende Prozessgas zu erhalten,
   - welche derart eingerichtet ist, dass von ihr aus dem verbleibenden Prozessgas auf einer Permeatseite der Membranvorrichtung ein kohlenwasserstoffangereichertes Rückführprozessgas und auf einer Retentatseite der Membranvorrichtung ein kohlenwasserstoffarmes Weiterführprozessgas erhalten wird,
   - deren Permeatseite über eine KW-Angereichertes-Gas-Rückführleitung mit der Prozessgasleitung an einer Rückführstelle stromaufwärts von dem Verdichter, optional zwischen der Entfeuchtungs-Kühlvorrichtung und dem Verdichter, verbunden ist, um das kohlenwasserstoffangereicherte Rückführprozessgas an dieser Rückführstelle zu dem Prozessgas rückzuführen, um dessen Kohlenwasserstoffgehalt zu erhöhen, und
   - deren Retentatseite an eine KW-Armes-Gas-Weiterführleitung angeschlossen ist, um das kohlenwasserstoffarme Weiterführprozessgas weiterzuführen.

Die Membranvorrichtung kann z.B. in der Art einer wie in der EP 0 329 962 A2 beschriebenen Gastrennmembraneinrichtung ausgebildet sein.

Indem bei der Erfindung eine über die Membranvorrichtung ablaufende Erhöhung des Kohlenwasserstoffgehalts des dem Verdichter zugeführten Prozessgases erfolgt, kann die Verflüssigung des Kohlenwasserstoffs in der Kühleinrichtung stromabwärts des Verdichters in Temperaturbereichen weit über 0°C bei mit einem Verdichter mit akzeptablen Energieaufwand erreichbaren Drücken (z.B. 10-15 bar) erreicht werden. Indem somit keine kryogene Kühlung/Verflüssigung durchgeführt werden muss, kann die erfindungsgemäße Anlage kosteneffizient betrieben werden und ist auch weniger komplex zu erstellen. Die Erfinder haben ferner erkannt, dass durch eine einfache Kühlung des Prozessgases stromabwärts der Zerkleinerungsvorrichtung und stromaufwärts des Verdichters in einfacher und kosteneffizienter Weise der Wassergehalt im Prozessgas in für die nachfolgend erfolgenden Prozesse (Verdichten, Kühlen zum Abscheiden des Kohlenwasserstoffs) ausreichender Weise reduzierbar ist, um diese nachfolgenden Prozesse nicht zu behindern. Durch die nicht-kryogen erfolgende Kühlung zum Verflüssigen der flüchtigen Kohlenwasserstoffe besteht auch keine oder geringe Gefahr einer Wasser-Vereisung der an der Verflüssigung beteiligten Anlagenkomponenten via der im Prozessgas nach der Entfeuchtung noch vorliegenden Restfeuchte.

Die Kühlschrankzerkleinerungseinrichtung kann z.B. mit einer Heizvorrichtung versehen sein, die mit der Prozesskammer verbunden ist, um die Prozesskammer auf eine Zerkleinerungsprozesstemperatur zu erwärmen, die optional in einem Bereich von 70° bis 80° liegt. Hierbei hat sich gezeigt, dass bei höheren Temperaturen ein Herauslösen von Gasen, inklusive der flüchtigen Kohlenwasserstoffgase, aus z.B. den geschäumten Kühlschrankdämmelementen verbessert erfolgt. Als Heizvorrichtung kann z.B. eine Elektroheizvorrichtung herangezogen werden.

Die mechanische Zerkleinerungsvorrichtung weist z.B. eine Rotationsschlagvorrichtung auf, welche einen oder mehrere Rotationskörper aufweist, die in der Prozesskammer, optional am Boden der Prozesskammer, um eine Rotationsachse drehantreibbar angeordnet sind, und die jeweils mit wenigstens einer Schlagkette, z.B. mit wenigstens oder mit genau zwei Schlagketten, versehen ist (sind), die (z.B. von denen jede jeweils) mit einem Kettenende an dem Rotationskörper außerhalb dessen Rotationsachse befestigt ist und die (z.B. von denen jede jeweils) ein anderes, freies Kettenende hat, wobei die jeweilige Schlagkette optional eine Länge in einem Bereich von 30-50cm hat, und wobei optional die jeweilige Schlagkette als eine Ringkette ausgebildet ist. Es hat sich gezeigt, dass mittels dieser mechanisch relativ einfachen Ausgestaltungsart der mechanischen Zerkleinerungsvorrichtung ein Zerkleinern von geschäumten Kühlschrankdämmmaterial in eine Granulatform desselben erreichbar ist, was sich hinsichtlich eines Herauslösens der im Dämmmaterial enthaltenen Gase als effektiv/unterstützend erwiesen hat.

Die Kühleinrichtung kann z.B. einen ersten Kühleinrichtungs-Wärmetauscher aufweisen, welcher ferner in der Prozessgasrückführleitung zwischen der Gas-Flüssigkeit-Trennvorrichtung und der Membranvorrichtung (z.B. dem Verdichter unmittelbar nachfolgend) angeordnet ist und welcher eingerichtet ist, um das in der Prozessgasrückführleitung vorliegende, verbleibende Prozessgas mit dem verdichteten Prozessgas Wärme tauschen zu lassen. Mittels dieses ersten Kühleinrichtungs-Wärmetauschers kann eine (z.B. eine erste bzw. als erstes erfolgende) Abkühlung des verdichteten Prozessgases in effizienter/kosteneffizienter Weise erfolgen, da hierzu einfach das z.B. unbehandelte, aus der Gas-Flüssigkeit-Trennvorrichtung stammende verbleibende Prozessgas herangezogen wird. Hierbei ist der erste Kühleinrichtungs-Wärmetauscher z.B. direkt zwischen die Gas-Flüssigkeit-Trennvorrichtung und die Membranvorrichtung geschaltet.

Die Kühleinrichtung weist z.B. eine erste Kühleinrichtungs-Kühlvorrichtung auf, die ein Kälteaggregat, einen zweiten Kühleinrichtungs-Wärmetauscher und eine Kältemittelleitung aufweist, welche das Kälteaggregat und den zweiten Kühleinrichtungs-Wärmetauscher miteinander verbindet und in welcher ein Kältemittel zirkuliert, das von dem Kälteaggregat abkühlbar ist, wobei der zweite Kühleinrichtungs-Wärmetauscher zwischen dem ersten Kühleinrichtungs-Wärmetauscher und der Gas-Flüssigkeit-Trennvorrichtung (z.B. unmittelbar stromaufwärts der Gas-Flüssigkeit-Trennvorrichtung) angeordnet ist und eingerichtet ist, um das Kältemittel mit dem verdichteten Prozessgas Wärme tauschen zu lassen, um dadurch z.B. das verdichtete Prozessgas auf die Abscheidungsbetriebstemperatur im Bereich von 5-15°C abzukühlen, sodass im Prozessgas enthaltener Kohlenwasserstoff via Kondensation als flüssiger Kohlenwasserstoff abgeschieden wird. Optional ist die Entfeuchtungs-Kühlvorrichtung z.B. als ein Entfeuchtungs-Wärmetauscher ausgebildet, der stromabwärts (z.B. unmittelbar stromabwärts) von dem zweiten Kühleinrichtungs-Wärmetauscher in der Kältemittelleitung angeordnet ist und eingerichtet ist, um das Kältemittel mit dem Prozessgas Wärme tauschen zu lassen, um das Prozessgas auf die Entfeuchtungstemperatur abzukühlen.

Das Kälteaggregat kann aufgrund der nicht-kryogen arbeitenden Kühlschrankrecyclinganlage kleiner und damit kosteneffizienter arbeitend ausgelegt werden. Im Falle des als Option genannten weiteren Verwendens des Kältemittels auch als Kühlmedium für die Entfeuchtungs-Kühlvorrichtung kann die Effizienz der Anlage weiter gesteigert werden.

Die Kühleinrichtung weist z.B. eine zweite Kühleinrichtungs-Kühlvorrichtung auf, die einen Luftkühler mit einem Kühlluftgebläse, einen dritten Kühleinrichtungs-Wärmetauscher und eine Kühlmittelleitung aufweist, welche den Luftkühler und den dritten Kühleinrichtungs-Wärmetauscher miteinander verbindet und in welcher ein Kühlmittel zirkuliert, das von dem Luftkühler mittels des Kühlluftgebläses luftkühlbar ist, wobei der dritte Kühleinrichtungs-Wärmetauscher zwischen dem ersten Kühleinrichtungs-Wärmetauscher und dem zweiten Kühleinrichtungs-Wärmetauscher angeordnet ist und eingerichtet ist, um das Kühlmittel mit dem verdichteten Prozessgas Wärme tauschen zu lassen. Die Luftkühlung ist kosteneffizient und erlaubt es, dass das Kälteaggregat der ersten Kühleinrichtungs-Kühlvorrichtung noch kleiner dimensioniert/ausgelegt werden kann.

Bei der hierin beschriebenen Kühlschrankrecyclinganlage kann z.B. die KW-Armes-Gas-Weiterführleitung an die Prozesskammer angeschlossen sein, sodass das kohlenwasserstoffarme Weiterführprozessgas der Prozesskammer zuführbar ist. Zusätzlich oder alternativ hierzu kann z.B. die KW-Armes-Gas-Weiterführleitung an eine Druck-Wechsel-Adsorptions-Einrichtung (DWA-Einrichtung) angeschlossen sein, welche zwei oder mehr Speicherbehälter mit Aktivkohlematerial aufweist, wobei der im Weiterführprozessgas verbliebene Kohlenwasserstoff von dem Aktivkohlematerial adsorbiert werden kann, um dadurch im Wesentlichen kohlenwasserstofffreie Abluft zu generieren, die über eine an den jeweiligen Speicherbehälter angeschlossene Abluftleitung an die Umgebung abführbar ist und/oder die über eine Regenerationsleitung jenem der Speicherbehälter zuführbar ist, dessen Aktivkohlematerial zu regenerieren ist. Die Kühlschrankrecyclinganlage ist damit flexibel betreibbar, um bei Bedarf oder stets saubere Abluft zu liefern, wobei die verbleibenden flüchtigen Kohlenwasserstoffe (KW) wieder dem Kohlenwasserstoff-Abscheidungsprozess zugeführt werden können.

Die Kühlschrankrecyclinganlage kann ferner z.B. mit einer Flüssigkeit-Flüssigkeit-Trennvorrichtung versehen sein,
- welche entweder mit der Gas-Flüssigkeit-Trennvorrichtung integral ausgebildet ist oder welche über eine Flüssigkeitsabführleitung mit der Gas-Flüssigkeit-Trennvorrichtung verbunden ist, um von dieser den abgeschiedenen, flüssigen Kohlenwasserstoff zu erhalten, und
- welche eingerichtet ist, um verbleibendes Wasser von dem abgeschiedenen, flüssigen Kohlenwasserstoff zu trennen. Die Flüssigkeit-Flüssigkeit-Trennvorrichtung arbeitet z.B. einfach via Schwerkraft, wobei sich das gegenüber dem flüssigen Kohlenwasserstoff schwerere Wasser im Wesentlichen selbsttätig trennt.

Die Kühlschrankrecyclinganlage kann ferner z.B. mit einer Kleinmaterialabführeinrichtung ausgestattet sein, welche an die Prozesskammer angeschlossen ist, um das durch die mechanische Zerkleinerungsvorrichtung zerkleinerte Material aus der Prozesskammer abzuführen.

Die Inertgas-Quelle und/oder die Retentatseite der Membranvorrichtung kann ferner z.B. über eine jeweilige Zusatz-Inertgas-Zuführleitung mit der KW-Angereichertes-Gas-Rückführleitung und/oder zwischen der Entfeuchtungs-Kühlvorrichtung und dem Verdichter mit der Prozessgasleitung an einer zugeordneten Zusatz-Inertgas-Zuführstelle verbunden sein, sodass über die zugeordnete Zusatz-Inertgas-Zuführstelle Inertgas, das von der Inertgas-Quelle stammt, und/oder KW-Angereichertes-Gas dem Prozessgas zuführbar ist, um den Sauerstoffgehalt im Prozessgas zu verringern, wobei in der Prozessgasleitung ein Sauerstoffsensor stromabwärts der jeweiligen Zusatz-Inertgas-Zuführstelle angeordnet ist, um den Sauerstoffgehalt im Prozessgas zu erfassen, und wobei die Kühlschrankrecyclinganlage ferner z.B. mit einer elektronischen Anlage-Steuervorrichtung versehen ist, welche mit dem Sauerstoffsensor sowie mit einem jeweiligen, in der jeweilig zugeordneten Zusatz-Inertgas-Zuführleitung angeordneten Zusatz-Inertgas-Regelventil elektrisch verbunden ist und welche eingerichtet ist, um auf Basis der vom Sauerstoffsensor als elektrische Signale erhaltenden Sauerstoffgehalte das jeweilige Zusatz-Inertgas-Regelventil so zu steuern, dass ein vorbestimmter Sauerstoffgehalt im Prozessgas auf Höhe des Sauerstoffsensors eingestellt wird, wobei der vorbestimmte Sauerstoffgehalt optional kleiner gleich einer Sauerstoffgrenzkonzentration (SGK) für das Treibmittel, optional i.V.m. Stickstoffgas als Inertgas z.B. kleiner gleich 9,3 mol.-%, ist. Diese Ausgestaltung der Anlage erlaubt es z.B. in effizienter Weise einen gewünschten vorbestimmten Sauerstoffgehalt im Prozessgas stromaufwärts des Verdichters einzustellen, ohne den Prozess der KW-Abscheidung zu sehr zu behindern und potentielle Explosionsrisiken zu minimieren.

Der hierin verwendete Begriff Sauerstoffgrenzkonzentration (SGK) ist eine maximale Sauerstoffkonzentration (Stoffmengenanteil) in einem Gemisch eines brennbaren Stoffes mit Luft und inertem Gas (z.B. Inertgas), in dem eine Explosion bei beliebigem Brennstoffanteil nicht mehr auftreten kann. Die SGK ist dabei von dem brennbaren Gas oder Dampf und dem verwendeten Inertgas abhängig.

Die Heizvorrichtung der Kühlschrankrecyclinganlage weist z.B. eine Wärmepumpenvorrichtung auf, die aufweist:
- eine Wärmepumpenzuführleitung, welche über eine Zulaufstelle sowie über eine Rücklaufstelle an die Kühlmittelleitung der zweiten Kühleinrichtungs-Vorrichtung angeschlossen ist,
- eine Wärmepumpe, die an die Wärmepumpenzuführleitung angeschlossen ist,
- eine Wärmepumpenabführleitung, welche an die Wärmepumpe sowie an einen an der Prozesskammer angeordneten Wärmeüberträger der Heizvorrichtung angeschlossen ist, mittels dessen die Wärme von der Wärmepumpe an die Prozesskammer übertragbar ist.

Dadurch kann zum Beispiel die Elektroheizvorrichtung eingespart werden oder deren Energieverbrauch reduziert werden, und die Energieeffizienz der Kühlschrankrecyclinganlage kann weiter gesteigert werden.

Die Erfindung stellt ferner bereit ein Verfahren zum Recyceln von Kühlschränken, optional mittels einer wie in dieser Anmeldung, z.B. wie vorausgehend beschriebenen, Kühlschrankrecyclinganlage, aufweisend die Schritte:
- Zuführen, optional vereinzeltes Zuführen, der Kühlschränke in eine (z.B. die) Prozesskammer,
- Zuführen von Inertgas, optional von Stickstoffgas, in die Prozesskammer,
- mechanisches Zerkleinern des jeweiligen Kühlschranks in der Prozesskammer,
- Abführen von in der Prozesskammer vorliegendem Gas als Prozessgas aus der Prozesskammer und Zuführen des Prozessgases an eine (z.B. die) Entfeuchtungs-Kühlvorrichtung,
- Kühlen des Prozessgases mittels der Entfeuchtungs-Kühlvorrichtung auf eine Temperatur, die optional im Bereich von 5-20°C liegt, um das Prozessgas zu entfeuchten via Kondensieren und Abscheiden von im Prozessgas enthaltenem Wasser,
- Verdichten des entfeuchteten Prozessgases mittels eines (z.B. des) Verdichters, optional auf einen Druck im Bereich von 10-15 bar,
- Abkühlen des verdichteten Prozessgases in einer (z.B. der) Kühleinrichtung auf eine (z.B. die) Abscheidungsbetriebstemperatur im Bereich von 5-15°C, um dadurch im Prozessgas enthaltenen Kohlenwasserstoff via Kondensation als flüssigen Kohlenwasserstoff abzuscheiden,
- Trennen des aus dem verdichteten und abgekühlten Prozessgas abgeschiedenen, flüssigen Kohlenwasserstoffs von dem verbleibenden Prozessgas mittels einer (z.B. der) Gas-Flüssigkeit-Trennvorrichtung,
- Zuführen des verbleibenden Prozessgases zu einer (z.B. der) Membranvorrichtung, von welcher aus dem verbleibenden Prozessgas auf einer (z.B. der) Permeatseite der Membranvorrichtung ein kohlenwasserstoffangereichertes Rückführprozessgas und auf einer (z.B. der) Retentatseite der Membranvorrichtung ein kohlenwasserstoffarmes Weiterführprozessgas erhalten wird,
- Rückführen des Rückführprozessgases an das Prozessgas in der Prozessgasleitung an einer (z.B. der) Rückführstelle stromaufwärts von dem Verdichter, optional zwischen der Entfeuchtungs-Kühlvorrichtung und dem Verdichter, um den Kohlenwasserstoffgehalt des Prozessgases zu erhöhen.

Das Verfahren kann z.B. ferner aufweisen:
- Zusatz-Zuführen von Inertgas, optional von Stickstoffgas, und/oder des Weiterführungsprozessgases zu dem Prozessgas an einer (z.B. der) zugeordneten Zusatz-Inertgas-Zuführstelle zwischen dem Verdichter und der Entfeuchtungs-Kühlvorrichtung, und/oder zu dem Rückführprozessgas an einer (z.B. der) entsprechend zugeordneten Zusatz-Inertgas-Zuführstelle in einer rückführgesteuerten (bzw. geregelten) Weise derart, dass der Sauerstoffgehalt des in den Verdichter eintretenden Prozessgases kleiner gleich einer Sauerstoffgrenzkonzentration (SGK) für das Treibmittel, optional i.V.m. Stickstoffgas als Inertgas z.B. kleiner gleich 9,3 mol.-%, ist.

Das Verfahren kann z.B. ferner aufweisen:
rückführgesteuertes (z.B. geregeltes) Beheizen der Prozesskammer, um darin eine vorbestimmte Zerkleinerungsprozesstemperatur, die optional im Bereich von 70-80° liegt, einzustellen.

Das Verfahren kann ferner z.B. aufweisen:
Entfernen von Kühlschrank-Kompressoren und optional Entfernen von Kühlschrank-Kältemittelleitungen von den Kühlschränken vor dem Zuführen der Kühlschränke in die Prozesskammer,
wobei die Kühlschränke mit Ausnahme der entfernten Kühlschrank-Kompressoren und optional mit Ausnahme der entfernten Kühlschrank-Kältemittelleitungen ansonsten komplett so wie erhalten der Prozesskammer zugeführt werden. Hierdurch kann z.B. eine (z.B. die) mechanische Zerkleinerungsvorrichtung mechanisch entlastet werden und auch die Zusammensetzung der zerkleinerten Materialien kann z.B. hinsichtlich einer weiteren Trennung derselben verbessert werden.

Bei dem Verfahren erfolgt das mechanische Zerkleinern z.B. derart, dass in den Kühlschränken vorliegendes, geschäumtes Dämmmaterial zu Partikeln in einer Größe von maximal 2mm Umkreisdurchmesser, optional von maximal 1mm Umkreisdurchmesser, zerkleinert wird. Es hat sich gezeigt, dass mit einer solchen Partikelbildung das Herauslösen von KW aus dem Kühlschrankdämmmaterial sehr effizient erfolgt.

Die Erfindung wird nachfolgend anhand von Ausführungsbeispielen beschrieben, welche die Erfindung aber nicht einschränken. Ist im Rahmen der obigen und der nachfolgenden Beschreibung von einem/einer ersten, zweiten, etc. Bauteil/Komponente (oder z.B. auch Schritt) etc. die Rede, dann wird hierdurch nicht unbedingt eine bestimmte Reihenfolge des Auftretens dieser Bauteile/Komponenten (oder z.B. Schritte) etc. festgelegt; d.h., das/die/der erste Bauteil/Komponente (oder z.B. Schritt) könnte auch das/die/der zweite oder dritte etc. Bauteil/Komponente (oder z.B. Schritt) sein, und vice versa.

In der Zeichnung zeigen:
Figur 1 eine schematische Ansicht einer Kühlschrankrecyclinganlage gemäß einem ersten Ausführungsbeispiel der Erfindung,
Figur 2 eine schematische Ansicht einer Kühlschrankrecyclinganlage gemäß einem zweiten Ausführungsbeispiel der Erfindung,
Figur 3 eine schematische Ansicht einer Kühlschrankrecyclinganlage gemäß einem dritten Ausführungsbeispiel der Erfindung,
Figur 4 eine schematische Ansicht einer Kühlschrankzerkleinerungseinrichtung mit, daran angeschlossen, einer Kühlschrankzuführeinrichtung und Kleinmaterialabführeinrichtung der Kühlschrankrecyclinganlage gemäß einem Ausführungsbeispiel der Erfindung,
Figur 5 eine Schnittansicht der abgedichteten Prozesskammer der Kühlschrankrecyclinganlage aus Fig. 4 entlang der Linie A-A,
Figur 6 eine Schnittansicht der abgedichteten Prozesskammer der Kühlschrankrecyclinganlage aus Fig. 4 entlang der Linie B-B,
Figur 7 ein Flussdiagramm eines Verfahrens zum Recyceln von Kühlschränken, und
Figur 8 ein Flussdiagramm des Verfahrens zum Recyceln von Kühlschränken gemäß Figur 7 mit zusätzlichen Schritten.

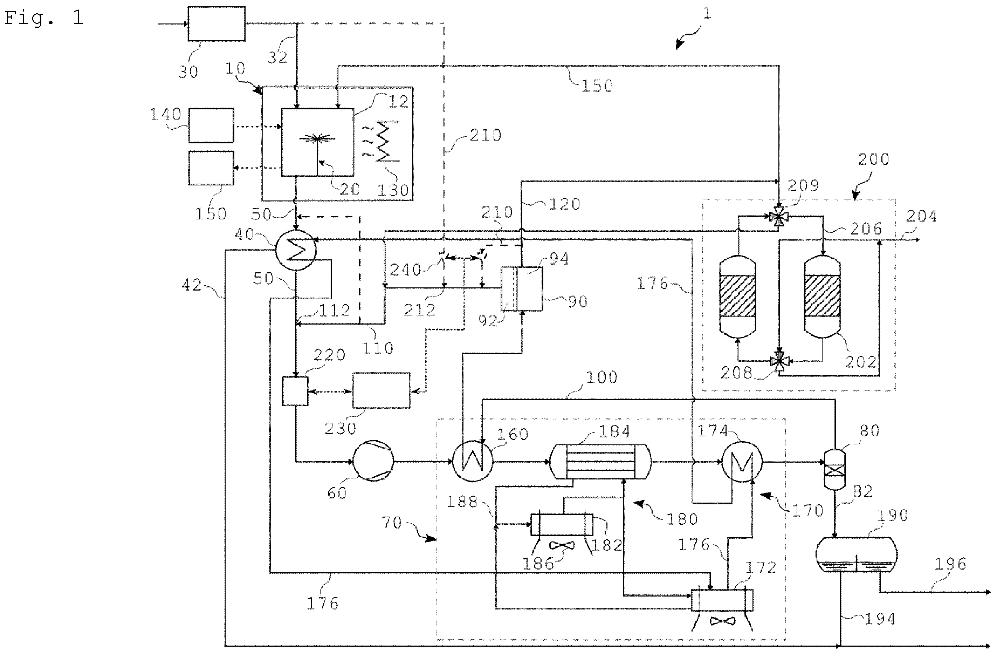

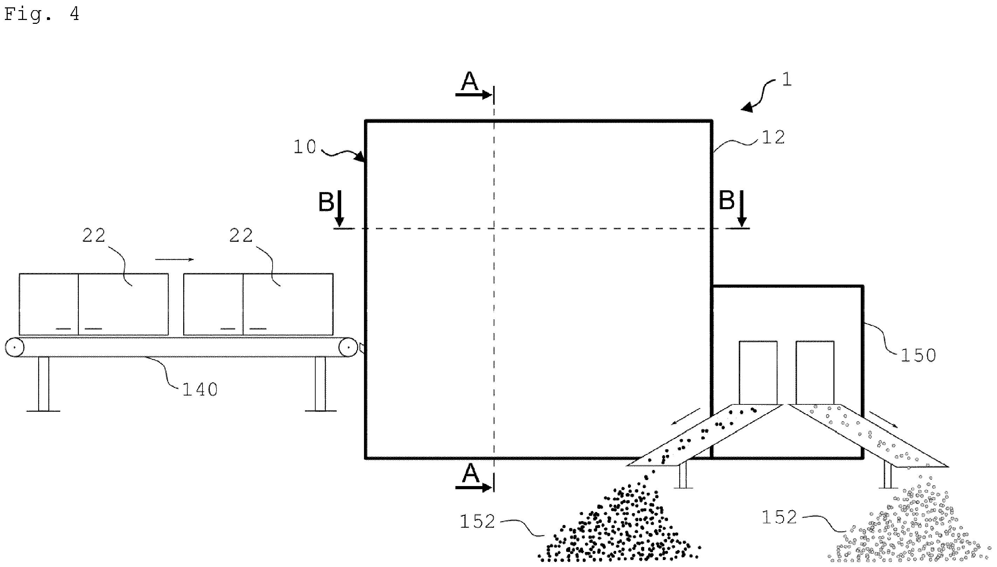

In Figur 1 ist eine schematische Ansicht einer Kühlschrankrecyclinganlage 1 gemäß einem ersten Ausführungsbeispiel der Erfindung dargestellt, welche eine Kühlschrankzerkleinerungseinrichtung 10 aufweist, die eine abgedichtete Prozesskammer 12 und eine in der Prozesskammer 12 angeordnete, mechanische Zerkleinerungsvorrichtung 20 zum mechanischen Zerkleinern eines Kühlschranks 22 (siehe z.B. Fig. 4) hat. Die Kühlschrankrecyclinganlage 1 weist ferner eine Inertgas-Quelle 30 auf, die über eine Inertgasleitung 32 an die Prozesskammer 12 angeschlossen ist und z.B. der Prozesskammer 12 unmittelbar vorgelagert ist. Von der Inertgas-Quelle 30 aus ist der Prozesskammer 12 Inertgas, optional Stickstoffgas, zuführbar, um die bei der mechanischen Zerkleinerung der Kühlschränke 22 in der Prozesskammer 12 entstehenden Gase zu inertisieren und so eine Explosionsgefahr innerhalb der Prozesskammer 12 zu minimieren. Andere Inertgase als Stickstoffgas, z.B. CO2, könnten z.B. bei Verwendung von Membrantechnologien (siehe z.B. weiter unten beschriebene Membranvorrichtung) Nachteile im Hinblick auf ein Diffusionsverhalten haben.

Weiterhin weist die Kühlschrankrecyclinganlage 1 eine Entfeuchtungs-Kühlvorrichtung 40 auf, die über eine Prozessgasleitung 50 mit der Prozesskammer 12 verbunden ist. Die Entfeuchtungs-Kühlvorrichtung 40 ist eingerichtet, um aus der Prozesskammer 12 abgeführtes Prozessgas, welches aus dem mechanischen Zerkleinern des Kühlschranks 22 hervorgehendes Kohlenwasserstoffgas enthält, zu erhalten. Die Entfeuchtungs-Kühlvorrichtung 40 ist ebenfalls eingerichtet, um das Prozessgas auf eine Entfeuchtungstemperatur, welche optional im Bereich von 5°-20° liegt, abzukühlen, sodass Wasser aus dem Prozessgas via Kondensation über eine Abwasserleitung 42 abscheidbar ist, um das Prozessgas zu entfeuchten.

Die Kühlschrankrecyclinganlage 1 weist ferner einen Verdichter 60 auf, der stromabwärts von der Entfeuchtungs-Kühlvorrichtung 40 in der Prozessgasleitung 50 angeordnet ist. Der Verdichter 60 ist eingerichtet, um das entfeuchtete Prozessgas zu verdichten, optional auf einen Druck im Bereich von 10-15 bar.

Zudem weist die Kühlschrankrecyclinganlage 1 eine Kühleinrichtung 70 auf, die in der Prozessgasleitung 50 stromabwärts von dem Verdichter 60 und z.B. unmittelbar nach dem Verdichter 60 angeordnet ist. Die Kühleinrichtung 70 ist eingerichtet, um das verdichtete Prozessgas auf eine Abscheidungsbetriebstemperatur im Bereich von 5-15°C abzukühlen, um dadurch im Prozessgas enthaltenen Kohlenwasserstoff via Kondensation als flüssigen Kohlenwasserstoff abzuscheiden.

Zudem weist die Kühlschrankrecyclinganlage 1 eine Gas-Flüssigkeit-Trennvorrichtung 80 auf, die stromabwärts von und unmittelbar nach der Kühleinrichtung 70 in der Prozessgasleitung 50 angeordnet ist. Die Gas-Flüssigkeit-Trennvorrichtung 80 ist eingerichtet, um den aus dem verdichteten und abgekühlten Prozessgas abgeschiedenen, flüssigen Kohlenwasserstoff über eine Flüssigkeitsabführleitung 82 von dem verbleibenden Prozessgas zu trennen.

Die Kühlschrankrecyclinganlage 1 weist ferner eine Membranvorrichtung 90 auf, welche über eine Prozessgasrückführleitung 100 mit der Gas-Flüssigkeit-Trennvorrichtung 80 verbunden ist. Die Membranvorrichtung 90 ist eingerichtet, um das verbleibende Prozessgas über die Prozessgasrückführleitung 100 von der Gas-Flüssigkeit-Trennvorrichtung 80 zu erhalten. Die Membranvorrichtung 90 ist zudem eingerichtet, dass von ihr aus dem verbleibenden Prozessgas auf einer Permeatseite 92 der Membranvorrichtung 90 ein kohlenwasserstoffangereichertes Rückführprozessgas und auf einer Retentatseite 94 der Membranvorrichtung 90 ein kohlenwasserstoffarmes Weiterführprozessgas erhalten wird. Die Permeatseite 92 der Membranvorrichtung 90 ist über eine KW-Angereicherte-Gas-Rückführleitung 110 mit der Prozessgasleitung 50 an einer Rückführstelle 112 stromaufwärts von dem Verdichter 60 zwischen der Entfeuchtungs-Kühlvorrichtung 40 und dem Verdichter 60 verbunden, um das kohlenwasserstoffangereicherte Rückführprozessgas an dieser Rückführstelle 112 zu dem Prozessgas rückzuführen, um dessen Kohlenwasserstoffgehalt zu erhöhen. Die Retentatseite 94 der Membranvorrichtung 90 ist an eine KW-Armes-Gas-Weiterführleitung 120 angeschlossen, um das kohlenwasserstoffarme Weiterführprozessgas weiterzuführen. Die KW-Armes-Gas-Weiterführleitung 120 ist gemäß dem vorliegenden Ausführungsbeispiel mit der Prozesskammer 12 verbunden, um der Prozesskammer 12 kohlenwasserstoffarmes Weiterführgas zuzuführen.

In diesem Ausführungsbeispiel ist die Kühlschrankzerkleinerungseinrichtung 10 der Kühlschrankrecyclinganlage 1 zudem mit einer Heizvorrichtung 130 versehen. Die Heizvorrichtung 130 ist unmittelbar mit der Prozesskammer 12 verbunden, um die Prozesskammer 12 auf eine Zerkleinerungsprozesstemperatur zu erwärmen bzw. erwärmen zu können, die optional in einem Bereich von 70° bis 80° liegt, um ein Herauslösen von Gasen aus z.B. den geschäumten Kühlschrankdämmelementen zu verbessern. Als Heizvorrichtung 130 kann z.B. eine Elektroheizvorrichtung herangezogen werden.

Die Kühlschrankzerkleinerungseinrichtung 10 der Kühlschrankrecyclinganlage 1 ist eingerichtet, dass die zu zerkleinernden Kühlschränke 22 von außerhalb mittels einer Kühlschrankzuführeinrichtung 140 der Prozesskammer 12 zuführbar sind, um die mechanische Zerkleinerungsvorrichtung 20 mit zu zerkleinernden Kühlschränken 22 zu versorgen und diese zu zerkleinern. Die Kühlschrankrecyclinganlage 1 ist ferner mit einer Kleinmaterialabführeinrichtung 150 bereitgestellt, um durch die mechanische Zerkleinerungsvorrichtung 20 zerkleinertes Material 152 (siehe z.B. Fig. 4) der Kühlschränke 22 aus der Prozesskammer 12 abzuführen. Die Kleinmaterialabführeinrichtung 150 ist dazu an die Prozesskammer 12 angeschlossen und eingerichtet, das zerkleinerte Material 152 der Kühlschränke 22 in Abhängigkeit von den werkstofflichen Eigenschaften des zerkleinerten Materials 152 aufzutrennen, um dieses anschließend recyceln und/oder wiederverwerten zu können.

Die Kühleinrichtung 70, die hier dem Verdichter 60 unmittelbar nachgelagert und eingerichtet ist, um das durch den Verdichter 60 erwärmte Prozessgas auf die Abscheidungsbetriebstemperatur im Bereich von 5-15°C abzukühlen, weist einen ersten Kühleinrichtungs-Wärmetauscher 160 auf. Der erste Kühleinrichtungs-Wärmetauscher 160 ist zum einen in der Prozessgasleitung 50 angeordnet und ist zum anderen auch in der Prozessgasrückführleitung 100, und zwar zwischen der Gas-Flüssigkeit-Trennvorrichtung 80 und der Membranvorrichtung 90, angeordnet. Der erste Kühleinrichtungswärmetauscher 160 ist eingerichtet, das in der Prozessgasrückführleitung 100 vorliegende, verbleibende Prozessgas mit dem verdichteten Prozessgas Wärme tauschen zu lassen. Mittels dieses ersten Kühleinrichtungs-Wärmetauschers 160 erfolgt eine (z.B. eine erste bzw. als erstes erfolgende) Abkühlung des verdichteten Prozessgases in effizienter/kosteneffizienter Weise, da hierzu einfach das z.B. unbehandelte, aus der Gas-Flüssigkeit-Trennvorrichtung 80 stammende verbleibende Prozessgas als Wärmetauschmedium zum Kühlen herangezogen wird. Der erste Kühleinrichtungs-Wärmetauscher 160 ist hierfür z.B. unmittelbar nach dem Verdichter 60 in der Prozessgasleitung 50 angeordnet.

Die Kühleinrichtung 70 weist ferner eine erste Kühleinrichtungs-Kühlvorrichtung 170 auf, welche wiederum ein Kälteaggregat (z.B. ein elektrisch betriebenes Kälteaggregat) 172, einen zweiten Kühleinrichtungs-Wärmetauscher 174 und eine Kältemittelleitung 176 aufweist. Die Kältemittelleitung 176 verbindet das Kälteaggregat 172 und den zweiten Kühleinrichtungs-Wärmetauscher 174 miteinander und zirkuliert ein Kältemittel, welches vom Kälteaggregat 172 abkühlbar ist. Der zweite Kühleinrichtungs-Wärmetauscher 174 ist zwischen dem ersten Kühleinrichtungs-Wärmetauscher 160 und der Gas-Flüssigkeits-Trennvorrichtung 80 in der Prozessgasleitung 50 angeordnet, und eingerichtet, um das Kältemittel mit dem verdichteten Prozessgas Wärme tauschen zu lassen. Entsprechend ist dadurch im Prozessgas enthaltener Kohlenwasserstoff via Kondensation in dem zweiten Kühleinrichtungs-Wärmetauscher 174 abscheidbar.

In diesem Ausführungsbeispiel ist die Entfeuchtungs-Kühlvorrichtung 40 als ein Entfeuchtungs-Wärmetauscher ausgebildet, welcher zum einen in der Prozessgasleitung 50 und zum anderen in der Kältemittelleitung 176 zwischen (z.B. wie hier unmittelbar zwischen) dem zweiten Kühleinrichtungs-Wärmetauscher 174 und dem Kälteaggregat 172 in der Kältemittelleitung 176 angeordnet ist. Die als Entfeuchtungs-Wärmetauscher ausgebildete Entfeuchtungs-Kühlvorrichtung 40 ist eingerichtet, um das Kältemittel mit dem Prozessgas Wärme tauschen zu lassen, um das Prozessgas auf die Entfeuchtungstemperatur mittels einer Restkälte des Kältemittels abzukühlen, wodurch die Effizienz der Kühlschrankrecyclinganlage 1 weiter gesteigert wird.

Die Kühleinrichtung 70 der Kühlschrankrecyclinganlage 1 weist ferner eine zweite Kühleinrichtungs-Kühlvorrichtung 180 auf, welche wiederum einen Luftkühler 182 mit einem Kühlluftgebläse (z.B. einem elektrisch betriebenen Kühlluftgebläse) 186, einen dritten Kühleinrichtungs-Wärmetauscher 184 und eine Kühlmittelleitung 188 aufweist. Die Kühlmittelleitung 188 verbindet den Luftkühler 182 und den dritten Wärmetauscher 184 miteinander und zirkuliert ein Kühlmittel, das vom Luftkühler 182 mittels des Kühlluftgebläses 186 luftkühlbar ist. Zusätzlich ist z.B. die Kühlmittelleitung 188 mit dem Kälteaggregat 172 der ersten Kühleinrichtungs-Kühlvorrichtung 170 verbunden oder z.B. selektiv verbindbar, um (z.B. optional, z.B. selektiv, z.B. in zuschaltbarer Weise) imstande zu sein, das Kühlmittel zusätzlich zu kühlen. Der dritte Kühleinrichtungs-Wärmetauscher 184 ist zwischen (z.B. unmittelbar zwischen) dem ersten Kühleinrichtungs-Wärmetauscher 160 und dem zweiten Kühleinrichtungs-Wärmetauscher 174 in der Prozessgasleitung 50 angeordnet und eingerichtet, um das Kühlmittel mit dem verdichteten Prozessgas Wärme tauschen zu lassen. Der zweite Kühleinrichtungs-Wärmetauscher 174 ist ferner mit der Gas-Flüssigkeit-Trennvorrichtung 80 über die Prozessgasleitung 50 verbunden **(z.B.** unmittelbar verbunden), um das Prozessgas mit dem kohlenwasserstoffhaltigen Kondensat der Gas-Flüssigkeit-Trennvorrichtung 80 zuzuführen.

In diesem Ausführungsbeispiel weist die Kühlschrankrecyclinganlage 1 eine von der Gas-Flüssigkeit-Trennvorrichtung 80 separate Flüssigkeit-Flüssigkeit-Trennvorrichtung 190 auf. Die Flüssigkeit-Flüssigkeit-Trennvorrichtung 190 ist über eine Flüssigkeitsabführleitung 192 mit der Gas-Flüssigkeit-Trennvorrichtung 80 verbunden und ist eingerichtet, um das gegenüber dem flüssigen Kohlenwasserstoff schwerere Wasser via Schwerkraft im Wesentlichen selbsttätig zu trennen. Das durch die Flüssigkeit-Flüssigkeit-Trennvorrichtung 190 getrennte Wasser und der flüssige Kohlenwasserstoff sind jeweils zugeordnet über eine Abwasserverbindungsleitung 194 der Kühlschrankrecyclinganlage 1 und über eine Treibmittel-Abführ-Leitung 196 der Kühlschrankrecyclinganlage 1 abführbar. Die Abwasserverbindungsleitung 194 ist ferner mit der Abwasserleitung 42 der Entfeuchtungs-Kühleinrichtung 40 verbunden, um das getrennte Wasser weiter zum Abwasser abzuführen. Die Treibmittel-Abführ-Leitung 196 kann beispielsweise dafür verwendet werden, um den flüssigen Kohlenwasserstoff einer Treibmittelabfüllanlage zuzuführen.

Die Kühlschrankrecyclinganlage 1 weist hier z.B. ferner eine Druck-Wechsel-Adsorptions-Einrichtung 200 auf, die mit der KW-Armes-Gas-Weiterführleitung 120 zwischen der Membranvorrichtung 90 bzw. deren Retentatseite 94 und der Prozesskammer 12 der Kühlschrankzerkleinerungseinrichtung 10 verbunden ist. Die Druck-Wechsel-Adsorption-Einrichtung 200 weist zwei oder mehr Speicherbehälter 202 mit Aktivkohlematerial, eine Abluftleitung 204, eine Regenerationsleitung 206 und ein erstes und ein zweites Regelventil 208, 209 auf. Die Druck-Wechsel-Adsorptions-Einrichtung 200 ist imstande, den im Weiterführprozessgas verbliebenen Kohlenwasserstoff vom Aktivkohlematerial adsorbieren zu lassen, um dadurch im Wesentlichen kohlenwasserstofffreie Abluft zu generieren. Die im Wesentlichen kohlenwasserstofffreie Abluft ist mittels Betätigung der beiden Regelventile 208, 209 über eine an den jeweiligen Speicherbehälter 202 angeschlossene Abluftleitung 204 an die Umgebung abführbar und/oder mittels Betätigung der beiden Regelventile 208, 209 über die Regenerationsleitung 206 jenem der Speicherbehälter 202 zuführbar, dessen Aktivkohlematerial zu regenerieren ist.

Die Kühlschrankrecyclinganlage 1 weist optional eine Zusatz-Inertgas-Zuführleitung 210 auf. Die Zusatz-Inertgas-Zuführleitung 210 ist mit der Inertgas-Quelle 30 und/oder mit der Retentatseite 94 der Membranvorrichtung 90 verbunden und ist ferner zwischen der Entfeuchtungs-Kühlvorrichtung 40 und dem Verdichter 60, oder z.B. zwischen der Prozesskammer 12 und der Entfeuchtungs-Kühlvorrichtung 40 mit der Prozessgasleitung 50 an einer zugeordneten Zusatz-Inertgas-Zuführstelle 212 verbunden. Mittels der zugeordneten Zusatz-Inertgas-Zuführstelle 212 ist Inertgas, das von der Inertgas-Quelle 30 stammt, und/oder KW-Angereichertes-Gas dem Prozessgas zuführbar, um, z.B. bei Bedarf, den Sauerstoffgehalt im Prozessgas zu verringern.

Die Prozessgasleitung 50 der Kühlschrankrecyclinganlage 1 weist hier z.B. einen Sauerstoffsensor 220 stromabwärts der Zusatz-Inertgas-Zuführstelle 212 zwischen der Entfeuchtungs-Kühlvorrichtung 40 und dem Verdichter 60 auf. Der Sauerstoffsensor 220 ist dazu eingerichtet, um den Sauerstoffgehalt im Prozessgas zu erfassen, wobei der vorbestimmte Sauerstoffgehalt optional kleiner gleich einer Sauerstoffgrenzkonzentration (SGK) für das Treibmittel, optional i.V.m. Stickstoffgas als Inertgas z.B. kleiner gleich 9,3 mol.-%, ist.

Die Kühlschrankrecyclinganlage 1 weist hier z.B. ferner eine elektronische Anlage-Steuervorrichtung 230 auf, welche mit dem Sauerstoffsensor 200 sowie mit einem jeweiligen, in der jeweilig zugeordneten Zusatz-Inertgas-Zuführleitung 210 angeordneten Zusatz-Inertgas-Regelventil 240 elektrisch verbunden ist. Die elektronische Anlage-Steuervorrichtung 230 ist eingerichtet, um auf Basis der vom Sauerstoffsensor 220 als elektrische Signale erhaltenden Sauerstoffgehalte das jeweilige Zusatz-Inertgas-Regelventil 240 so zu steuern, dass ein vorbestimmter Sauerstoffgehalt im Prozessgas auf Höhe des Sauerstoffsensors 220 eingestellt wird.

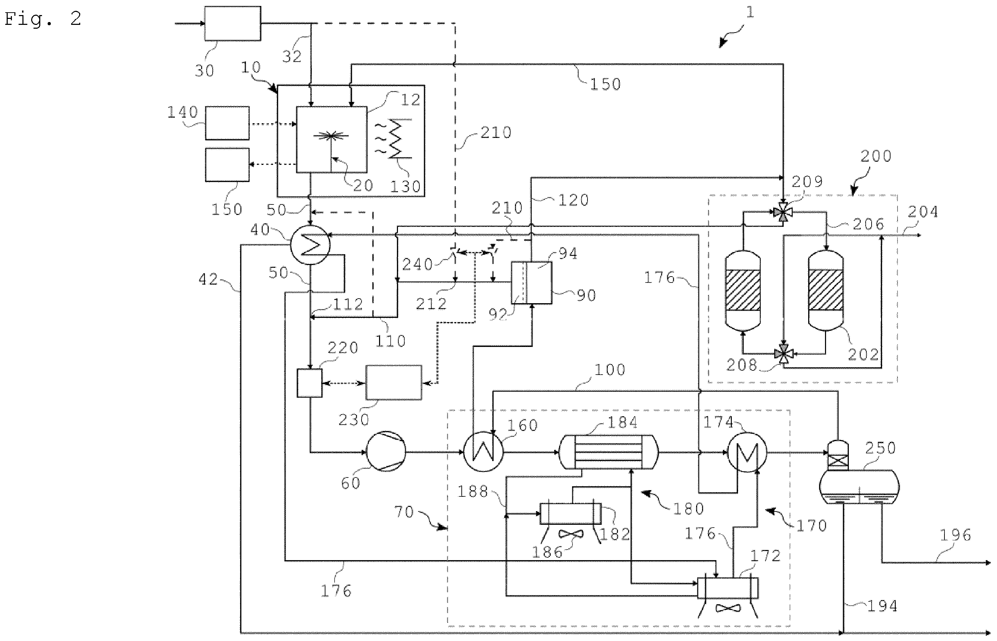

Figur 2 zeigt eine Kühlschrankrecyclinganlage 1 gemäß einem zweiten Ausführungsbeispiel der Erfindung. Die Kühlschrankrecyclinganlage 1 gemäß dem zweiten Ausführungsbeispiel ist im Wesentlichen gleich jener des ersten Ausführungsbeispiels ausgebildet, sodass hinsichtlich der Gemeinsamkeiten auf die vorausgehende Beschreibung verwiesen wird und auch die entsprechenden Bezugszeichen in Figur 2 eingetragen sind. Nachfolgend wird daher nur noch auf die Unterschiede eingegangen.

Im Gegensatz zum Ausführungsbeispiel von Figur 1 weist das Ausführungsbeispiel von Figur 2 eine Drei-Phasen-Abscheide-Einrichtung 250 auf, welche die Gas-Flüssigkeit-Trennvorrichtung 80 und die Flüssigkeit-Flüssigkeit-Trennvorrichtung 190 aus dem vorherigen Ausführungsbeispiel ersetzt und welche die Funktionen sowohl der Gas-Flüssigkeit-Trennvorrichtung 80 als auch der Flüssigkeit-Flüssigkeit-Trennvorrichtung 190 vereint. D.h. bei dem Ausführungsbeispiel von Figur 2 sind die Gas-Flüssigkeit-Trennvorrichtung 80 und die Flüssigkeit-Flüssigkeit-Trennvorrichtung 190 in Form der Drei-Phasen-Abscheide-Einrichtung 250 integral ausgebildet, bzw. ist die Flüssigkeit-Flüssigkeit-Trennvorrichtung 190 in die Gas-Flüssigkeit-Trennvorrichtung 80 integriert. Die Drei-Phasen-Abscheide-Einrichtung 250 ist imstande, das aus der Kühleinrichtung 70 ausgelassene Prozessgas mit flüssigem Kohlenwasserstoff in ein Rückführprozessgas, flüssigen Kohlenwasserstoff und Wasser zu trennen. Das Rückführprozessgas wird anschließend, wie im ersten Ausführungsbeispiel, über die Prozessgasrückführleitung 100 der Membranvorrichtung 90 zugeführt, und das Wasser und der flüssige Kohlenwasserstoff werden jeweils zugeordnet über die Abwasserverbindungsleitung 194 und die Treibmittel-Abfüll-Leitung 196 abgeführt. Mittels der Drei-Phasen-Abscheide-Einrichtung 250 kann z.B. die Komplexität der Kühlschrankrecyclinganlage 1 verringert und der Prozess der Kohlenwasserstoffrückgewinnung weiter vereinfacht werden.

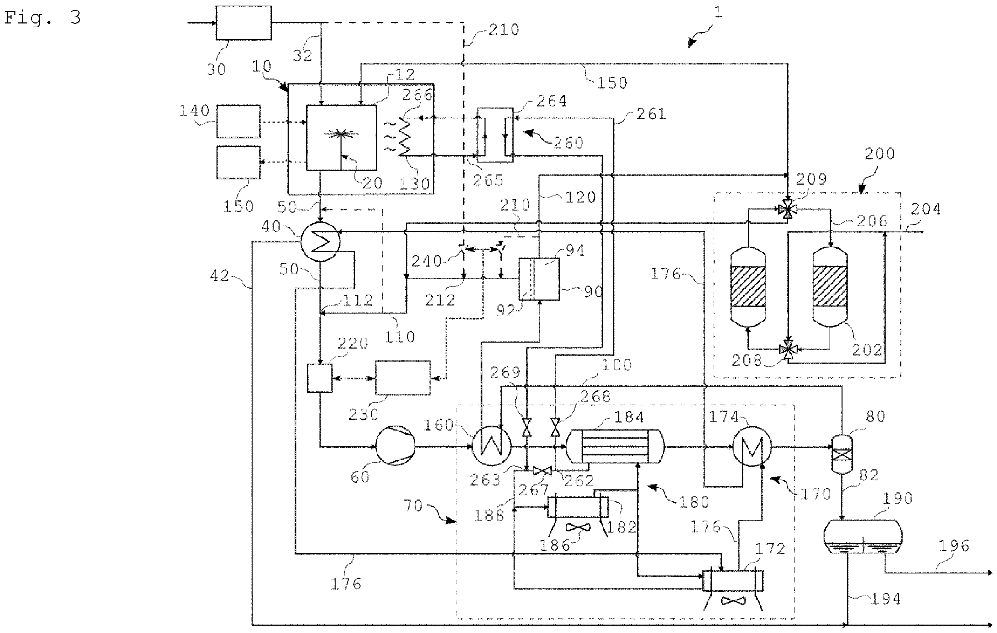

Figur 3 zeigt eine Kühlschrankrecyclinganlage 1 gemäß einem dritten Ausführungsbeispiel der Erfindung. Die Kühlschrankrecyclinganlage 1 gemäß dem dritten Ausführungsbeispiel ist im Wesentlichen gleich jener des ersten Ausführungsbeispiels ausgebildet, sodass hinsichtlich der Gemeinsamkeiten auf die vorausgehende Beschreibung verwiesen wird und auch die entsprechenden Bezugszeichen in Figur 3 eingetragen sind. Nachfolgend wird daher nur noch auf die Unterschiede eingegangen.

Im Gegensatz zum Ausführungsbeispiel von Figur 1 weist die Heizungsvorrichtung 130 im Ausführungsbeispiel von Figur 3 eine Wärmepumpenvorrichtung 260 auf, welche eine Wärmepumpenzuführleitung 261 aufweist. Die Wärmepumpenzuführleitung 261 ist nach (in diesem Falle unmittelbar nach) dem dritten Kühleinrichtungs-Wärmetauscher 184 über eine Zulaufstelle 262 an die Kühlmittelleitung 188 der zweiten Kühleinrichtungs-Vorrichtung 180 angeschlossen und ist über eine Rücklaufstelle 263 vor (in diesem Falle unmittelbar vor) dem Luftkühler 182 wieder an die Kühlmittelleitung 188 der zweiten Kühleinrichtungsvorrichtung 180 angeschlossen, wobei mittels der Wärmepumpenzuführleitung 261 einer Wärmepumpe 264 Kühlmittel aus dem dritten Kühleinrichtungs-Wärmetauscher 184 zugeführt und das Kühlmittel anschließend von der Wärmepumpe 264 zum Luftkühler 182 rückgeführt wird.

Die Wärmepumpenvorrichtung 260 weist ferner die Wärmepumpe 264 auf, welche zwischen der Zulaufstelle 262 und der Rücklaufstelle 23 der Wärmepumpenzuführleitung 262 an die Wärmepumpenzuführleitung 261 angeschlossen ist und eingerichtet ist, um Wärme zu erzeugen. Ferner kann die Wärmepumpe 264 z.B. eine Pumpe zum Fördern des Kühlmittels und/oder -Wärmepumpe-Regelventile (nicht dargestellt) aufweisen.

Zudem weist die Wärmepumpenvorrichtung 260 eine Wärmepumpenabführleitung 265 auf, welche an die Wärmepumpe 264 und an einen an der Prozesskammer 12 angeordneten Wärmeübertrager 266 (welcher Bestandteil der Heizvorrichtung 130 ist) angeschlossen ist, um die von der Wärmepumpe 264 erzeugte Wärme von der Wärmepumpe 264 zu der Prozesskammer 12 zu übertragen. Ferner weist die Wärmepumpenvorrichtung 260 ein Kühlmittelleitungsregelventil 267 auf, welches zwischen der Zulaufstelle 262 und der Rücklaufstelle 263 der Wärmepumpenzuführleitung 261 in der Kühlmittelleitung 188 angeordnet ist und eingerichtet ist, um einen Kühlmittelstrom in der Kühlmittelleitung 188 zu blockieren oder strömen zu lassen. Ferner weist die Heizvorrichtung 130 ein Zulauf-Regelventil 268 und ein Rücklauf-Regelventil 269 auf, welche jeweils zugeordnet zwischen der Zulaufstelle 262 und der Wärmepumpe 264 sowie der Wärmepumpe 264 und der Rücklaufstelle 263 angeordnet sind und den Kühlmittelstrom in der Wärmepumpenzuführleitung 261 steuern, wobei das Kühlmittelleitungsregelventil 267, das Zulauf-Regelventil 268 und das Rücklauf-Regelventil 269 mittels der elektronischen Anlage-Steuervorrichtung 230 relativ zueinander steuerbar/einstellbar sind. Zum Beispiel können das Zulauf-Regelventil 268 und das Rücklauf-Regelventil 269 geöffnet (z.B. in einem Offen-Zustand) sein, wenn das Kühlmittelleitungsregelventil 267 geschlossen (z.B. in einem Geschlossen-Zustand) ist und vice versa.

Mittels der Wärmepumpenvorrichtung 260 kann eine Restkälte des Kühlmittels, welches von dem dritten Kühleinrichtungs-Wärmetauscher 184 zu dem Luftkühler 182 strömt, weiterverwendet werden, um damit die Wärmepumpe 264 zu speisen, welche nach dem Prinzip einer Wärmekraftmaschine Wärme erzeugt und die Wärme wiederum mittels des Wärmeübertragers 266 der Prozesskammer 12 zuführt, um die Zerkleinerungsprozesstemperatur zu erreichen. Dadurch kann die Energieeffizienz der Kühlschrankrecyclinganlage weiter gesteigert werden.

Figur 4 zeigt eine schematische Ansicht einer Kühlschrankzerkleinerungseinrichtung 10 mit, daran angeschlossen, einer Kühlschrankzuführeinrichtung 140 und Kleinmaterialabführeinrichtung 150 der Kühlschrankrecyclinganlage 1 gemäß einem Ausführungsbeispiel, das z.B. bei den Ausführungsbespielen von Figuren 1 und 2 herangezogen werden kann.

Die Kühlschrankzuführeinrichtung 140, z.B. ein Förderband, ist dazu eingerichtet, der Kühlschrankzerkleinerungseinrichtung 10 und folglich der Prozesskammer 12 Kühlschränke 22 sequenziell, optional vereinzelt, zuzuführen, und ist z.B. der Kühlschrankzerkleinerungseinrichtung 10 unmittelbar vorgelagert. Das innerhalb der Prozesskammer 12 zerkleinerte Material 152 der Kühlschränke 22 liegt unter anderem in Granulatform vor, wobei die Kleinmaterialabführeinrichtung 150 dazu eingerichtet ist, das zerkleinerte Material 152 der Kühlschränke 22, aus der Prozesskammer 12 abzuführen und entsprechend der werkstofflichen Eigenschaften der zerkleinerten Materialien 152 aufzutrennen.

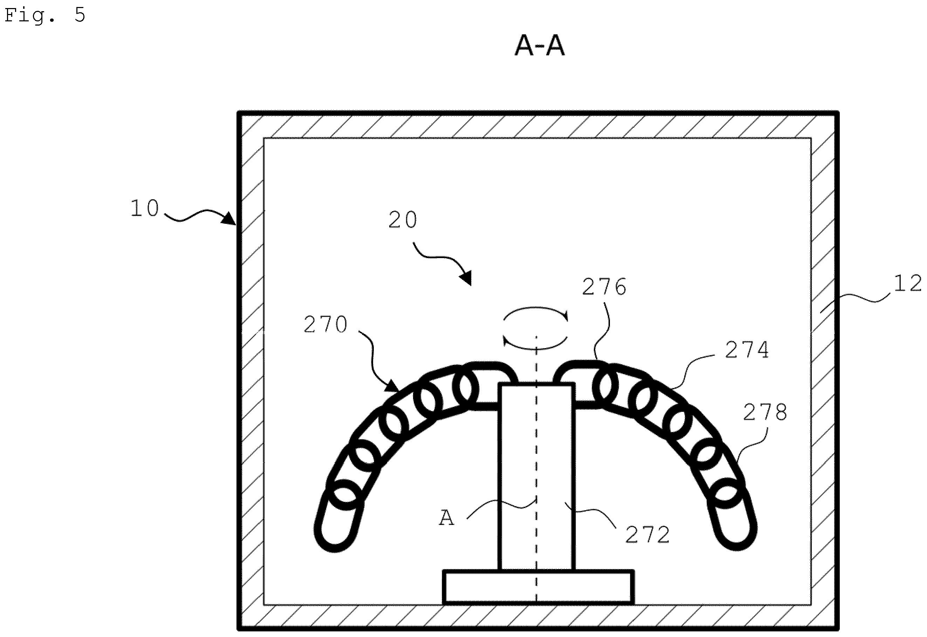

Mit Bezug auf Figur 5 weist die mechanische Zerkleinerungsvorrichtung 20 gemäß einem Ausführungsbeispiel der vorliegenden Erfindung z.B. genau eine Rotationsschlagvorrichtung 270 auf. Diese ist in der Prozesskammer 12, optional am Boden derselben, angeordnet und weist einen Rotationskörper 272 auf. Der Rotationskörper 272 ist um eine Rotationsachse A drehantreibbar und ist mit zwei Schlagketten 274 versehen, die hier z.B. als Ringketten ausgebildet sind. Die Schlagketten 274 sind mit ihren Kettenenden 276 jeweils am Rotationskörper 272 außerhalb dessen Rotationsachse A befestigt und haben jeweils ein freies Kettenende 268. Die Schlagketten 274 mit den freien Kettenenden 268 sind dazu eingerichtet, unter Rotation des Rotationskörpers 272 und damit der Schlagketten 274 einen wirbelnden Materialstrom des zerkleinerten Materials 152 zu erzeugen, sodass neben einer Wechselwirkung zwischen den zu zerkleinernden Kühlschränken 22 und der Rotationsschlagvorrichtung 270 auch eine Wechselwirkung innerhalb des zerkleinerten Materials 152 selbst erzeugt wird. Dadurch kann die mechanische Beanspruchung des zerkleinerten Materials 152 intensiviert werden und in Verbindung mit einer Wechselwirkung zwischen dem zerkleinerten Material 152 und der Prozesskammer 12 sowie dem wirbelnden Materialstrom sich die Granulatform des zerkleinerten Materials 152 ausbilden.

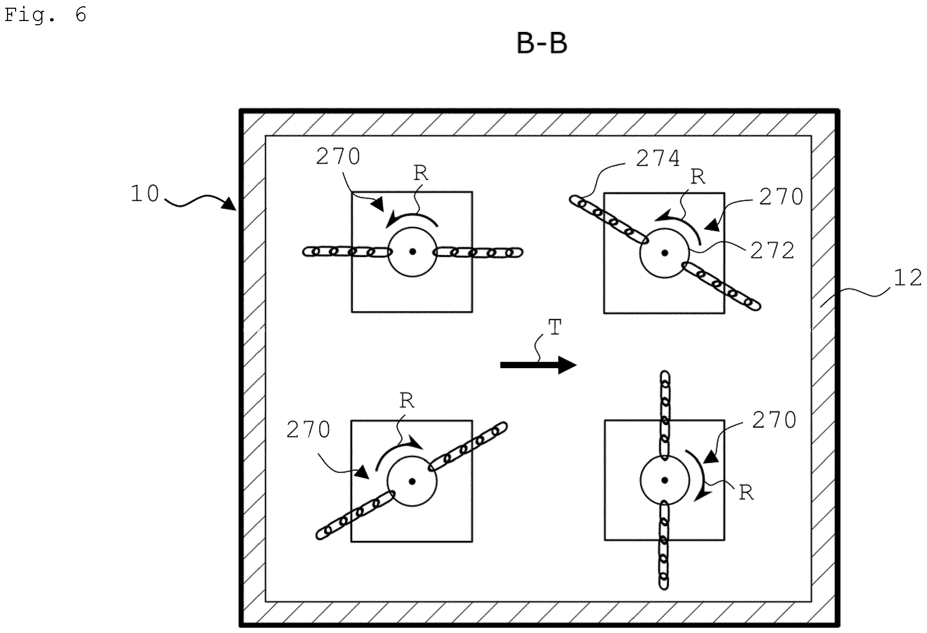

Figur 6 zeigt eine Schnittansicht der abgedichteten Prozesskammer 12 der Kühlschrankrecyclinganlage 1 aus Fig. 4 entlang der Linie B-B. In diesem Ausführungsbeispiel sind vier Rotationsschlagvorrichtungen 270 innerhalb der Prozesskammer 12 angeordnet, welche sich in z.B. einer rechteckförmigen Anordnung paarweise gegenüberliegen. Z.B. sind die in der Ansicht in Fig. 6 horizontal gegenüberliegenden Rotationsschlagvorrichtungen 270 mit einer gleichen Rotationsrichtung bereitgestellt und die vertikal gegenüberliegenden Rotationsschlagvorrichtung 270 mit einer entgegengesetzten Rotationsrichtung bereitgestellt (siehe Rotationspfeile R), sodass neben dem wirbelnden Materialstrom jeder Rotationsschlagvorrichtung 270 auch z.B. ein translatorischer Materialstrom (Translationspfeil T), z.B. durch die Prozesskammer 12 zur Kleinmaterialabführeinrichtung 150 hin erzeugt wird, um das zerkleinerte Material 152 in Richtung zu der Kleinmaterialabführeinrichtung 150 zuzuführen. Diese beispielhafte Anordnung der Rotationsschlagvorrichtungen 270 inklusive der jeweiligen Rotationsrichtungen kann in einer beliebigen Weise konfiguriert sein, um einen gerichteten Materialstrom des zerkleinerten Materials 152 innerhalb der Prozesskammer 12 zu erzeugen.

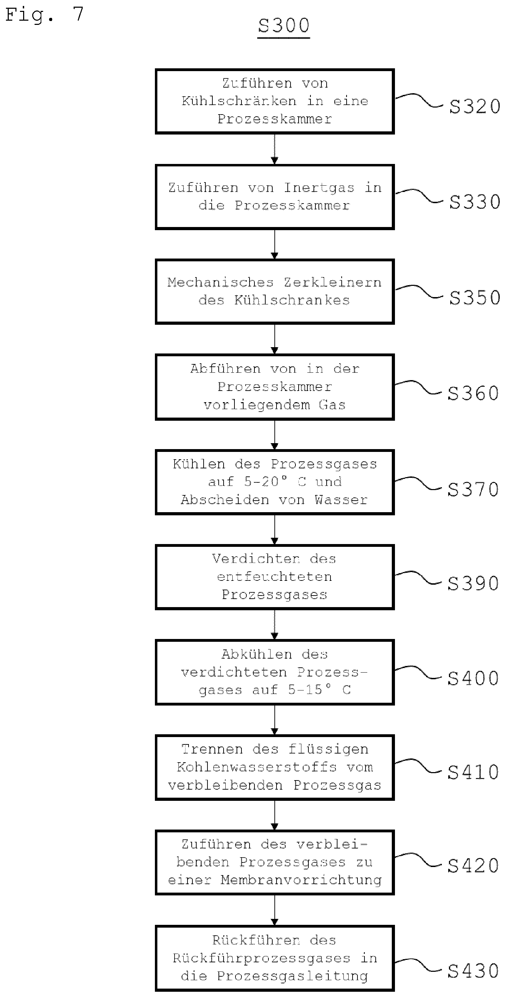

Figur 7 zeigt ein Flussdiagramm eines Verfahrens S300 zum Recyceln von Kühlschränken 22, welches z.B. mit der Kühlschrankrecyclinganlage 1 gemäß dem ersten Ausführungsbeispiel der Erfindung durchgeführt werden kann. In einem ersten Schritt S320 werden der Prozesskammer 12 der Kühlschrankzerkleinerungseinrichtung 20, optional vereinzelt, Kühlschränke 22 mittels der Kühlschrankzuführeinrichtung 140, z.B. dem Förderband, zugeführt.

In einem zweiten Schritt S330 wird der Prozesskammer 12, in die die Kühlschränke 22 mittels der Kühlschrankzuführeinrichtung 140 zugeführt wurden, Inertgas, optional Stickstoffgas zugeführt, um die Prozesskammer 12 zu inertisieren. Das Zuführen S330 von Inertgas kann dabei z.B. permanent während des Prozesses durchgeführt werden, um einen Inertgasgehalt in der Prozesskammer 12 durchweg hoch zu halten.

In einem dritten Schritt S350 werden die zugeführten Kühlschränke 22 mittels der mindestens einen oder mehreren Rotationsschlagvorrichtungen 270 der mechanischen Zerkleinerungsvorrichtung 20 mechanisch zerkleinert. Das mechanische Zerkleinern S350 erfolgt derart, dass in den Kühlschränken 22 vorliegendes, geschäumtes Dämmmaterial durch die mechanische Zerkleinerungsvorrichtung 20 zu Partikeln in einer Größe von maximal 2mm Umkreisdurchmesser, optional von maximal 1mm Umkreisdurchmesser, zerkleinert wird.

In einem vierten Schritt S360 wird das in der Prozesskammer 12 vorliegende Gas als kohlenwasserstoffhaltiges Prozessgas aus der Prozesskammer 12 über die Prozessgasleitung 50 abgeführt (z.B. abgesaugt) und anschließend der Entfeuchtungs-Kühleinrichtung 40 zugeführt, welche der Prozesskammer 12 nachgelagert ist.

In einem fünften Schritt S370 wird das durch die Prozessgasleitung 50 aus der Prozesskammer 12 bereitgestellte Prozessgas durch die Entfeuchtungs-Kühleinrichtung 40, die als Entfeuchtungs-Wärmetauscher ausgebildet ist, gekühlt. Das Prozessgas wird dabei vorzugsweise auf eine Temperatur in einem Bereich von 5-20°C abgekühlt, um das Prozessgas via Kondensieren zu entfeuchten und das Kondensat über die an die Entfeuchtungs-Kühleinrichtung 40 angeschlossene Abwasserleitung 42 abzuführen. Das entfeuchtete Gas wird anschließend über die Prozessgasleitung 50 dem Verdichter 60 zugeführt.

In einem sechsten Schritt S390 wird das dem Verdichter 60 zugeführte entfeuchtete Prozessgas auf einen Druck verdichtet, der optional im Bereich von 10-15 bar liegt, wodurch sich das entfeuchtete Prozessgas erwärmt. Die Druckerhöhung dient dazu, den Taupunkt der im Prozessgas vorhandenen Kohlenwasserstoffe zu erhöhen, sodass eine einfachere Abscheidung dieser energieeffizient möglich wird.

In einem siebten Schritt S400 wird das verdichtete Prozessgas der Kühleinrichtung 70 über die Prozessgasleitung 50 zugeführt, um nachfolgend mittels der Wärmetauscher 160, 174, 184 auf eine Temperatur im Bereich von 5-15°C gekühlt zu werden. Durch die Kühlung des Prozessgases wird aufgrund des erhöhten Taupunkts erneut Kohlenwasserstoff via Kondensation abgeschieden und das Prozessgas mit flüssigem Kohlenwasserstoff über die Prozessgasleitung 50 der Gas-Flüssigkeit-Trennvorrichtung 80 zugeführt.

In einem achten Schritt S410 wird in der Gas-Flüssigkeit-Trennvorrichtung 80 der im Prozessgas jetzt zum großen Teil flüssig vorliegende Kohlenwasserstoff von dem dann verbleibenden Prozessgas getrennt, indem der flüssige Kohlenwasserstoff durch die Flüssigkeitsabführleitung 82 abgeführt und das verbleibende Prozessgas über die Prozessgasrückführleitung 100 weitergeführt wird.

In einem neunten Schritt S420 wird das in der Prozessgasrückführleitung 100 befindliche verbleibende Prozessgas der Membranvorrichtung 90 zugeführt. Von dieser wird aus dem verbleibenden Prozessgas auf der Permeatseite 92 der Membranvorrichtung 90 das kohlenwasserstoffangereicherte Rückführprozessgas und auf der Retentatseite 94 der Membranvorrichtung 90 das kohlenwasserstoffarme Weiterführprozessgas erhalten.

In einem zehnten Schritt S430 wird das Rückführprozessgas an das Prozessgas rückgeführt. Dazu wird das Rückführprozessgas über die KW-angereicherte-Gas-Rückführleitung 110 an der Rückführstelle 112 stromaufwärts vom Verdichter 60, optional zwischen der Entfeuchtungs-Kühlvorrichtung 40 und dem Verdichter 60, dem Prozessgas in der Prozessgasleitung 50 zugeführt, um den Kohlenwasserstoffgehalt des Prozessgases in der Prozessgasleitung 50 zu erhöhen.

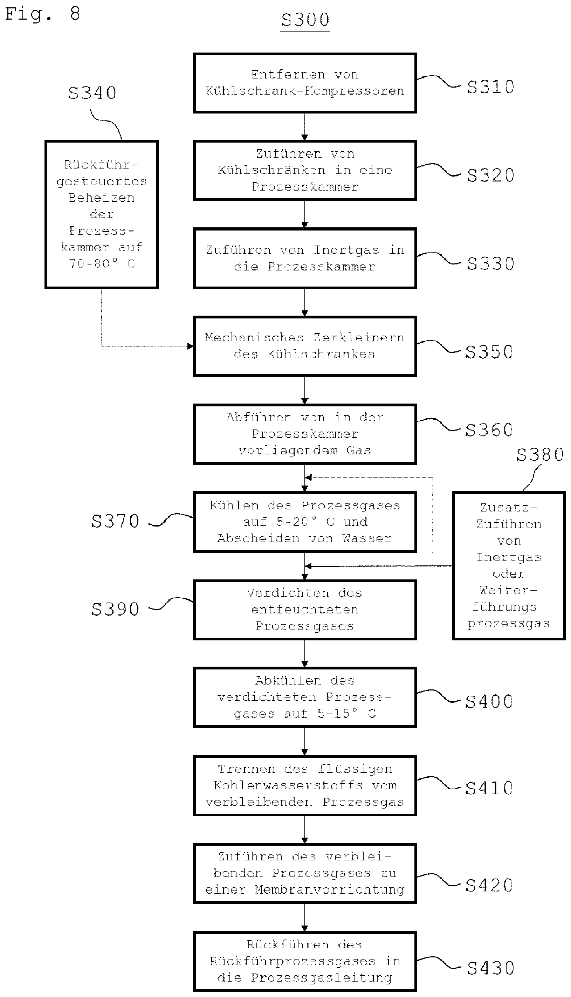

Figur 8 zeigt ein Flussdiagramm des Verfahrens S300 zum Recyceln von Kühlschränken 22 gemäß Figur 7 mit zusätzlichen Schritten. In einem zusätzlichen Schritt S340 wird die Prozesskammer 12 zusätzlich rückführgesteuert beheizt (diese Steuerung kann z.B. mittels der Anlage-Steuervorrichtung 230 der Kühlschrankrecyclinganlage 1 erfolgen), um darin die vorbestimmte Zerkleinerungsprozesstemperatur, die optional im Bereich von 70-80°C liegt, einzustellen. Das rückführgesteuerte Beheizen S340 kann z.B. parallel zu den vorherigen Schritten S310-S330 und z.B. permanent während des gesamten Verfahrens S300 geschehen, um die Temperatur der Prozesskammer 12 auf einem konstanten Niveau zu halten.

In einem weiteren zusätzlichen Schritt S310 werden Kühlschrank-Kompressoren der (zu recycelnden) Kühlschränke 22 und optional Kühlschrank-Kältemittelleitungen der (zu recycelnden) Kühlschränke 22 von den Kühlschränken 22 vor dem Zuführen S320 der Kühlschränke 22 in die Prozesskammer 12 entfernt. Dabei werden die Kühlschränke 22 mit Ausnahme der Kühlschrank-Kompressoren und optional mit Ausnahme der entfernten Kühlschrank-Kältemittelleitungen ansonsten komplett, so wie durch die Kühlschrankzuführeinrichtung 140 erhalten, der Prozesskammer 12 zum mechanischen Zerkleinern S350 zugeführt. Dies dient z.B. dazu, hohen Verschleiß der Schlagketten 274 der Rotationsschlagvorrichtung 22 aufgrund von daran aufschlagenden Metallteilen der Kühlschrank-Kompressoren und/oder Kühlschrank-Kältemittelleitungen zu vermeiden.

In einem weiteren zusätzlichen Schritt S380 wird dem Prozessgas zusätzlich Inertgas, optional Stickstoffgas, und/oder Weiterführprozessgas an der zugeordneten Zusatz-Inertgas-Zuführstelle 212 zwischen dem Verdichter 60 und der Entfeuchtungs-Kühlvorrichtung 40 zugeführt. Zudem kann Inertgas, optional Stickstoffgas, und/oder Weiterführprozessgas auch parallel oder unabhängig dazu zum Rückführprozessgas an der entsprechend zugeordneten Zusatz-Inertgas-Zuführstelle 212 zusätzlich zugeführt werden. Das Zusatz-Zuführen S380 erfolgt z.B. in einer rückführgesteuerten Weise derart, dass der Sauerstoffgehalt des in den Verdichter 60 eintretenden Prozessgases kleiner gleich der Sauerstoffgrenzkonzentration (SGK) für das Treibmittel, optional i.V.m. Stickstoffgas als Inertgas z.B. kleiner gleich 9,3 mol.-%, ist, sodass ein effizientes Arbeiten der Membranvorrichtung 90 ermöglicht wird.

### Bezugszeichenliste:

- 1: Kühlschrankrecyclinganlage
- 10: Kühlschrankzerkleinerungseinrichtung
- 12: Prozesskammer
- 20: mechanische Zerkleinerungsvorrichtung
- 22: Kühlschrank
- 30: Inertgas-Quelle
- 32: Inertgasleitung
- 40: Entfeuchtungs-Kühleinrichtung
- 42: Abwasserleitung
- 50: Prozessgasleitung
- 60: Verdichter
- 70: Kühleinrichtung
- 80: Gas-Flüssigkeit-Trennvorrichtung
- 82: Flüssigkeitsabführleitung
- 90: Membranvorrichtung
- 92: Permeatseite
- 94: Retentatseite
- 100: Prozessgasrückführleitung
- 110: KW-angereichertes-Gas-Rückführleitung
- 112: Rückführstelle
- 120: KW-armes-Gas-Weiterführleitung
- 130: Heizvorrichtung
- 140: Kühlschrankzuführeinrichtung
- 150: Kleinmaterialabführeinrichtung
- 152: zerkleinertes Material
- 160: erster Kühleinrichtungs-Wärmetauscher
- 170: erste Kühleinrichtungs-Kühlvorrichtung
- 172: Kälteaggregat
- 174: zweiter Kühleinrichtungs-Wärmetauscher
- 176: Kältemittelleitung
- 180: zweite Kühleinrichtungs-Vorrichtung
- 182: Luftkühler
- 184: dritter Kühleinrichtungs-Wärmetauscher
- 186: Kühlluftgebläse
- 188: Kühlmittelleitung
- 190: Flüssigkeit-Flüssigkeit-Trennvorrichtung
- 192: Flüssigkeitsabführleitung
- 194: Abwasserverbindungsleitung
- 196: Treibmittel-Abführ-Leitung
- 200: Druck-Wechsel-Adsorptions-Einrichtung
- 202: Speicherbehälter
- 204: Abluftleitung
- 206: Regenerationsleitung
- 208: erstes Regelventil
- 209: zweites Regelventil
- 210: Zusatz-Inertgas-Zuführleitung
- 212: Zusatz-Inertgas-Zuführstelle
- 220: Sauerstoffsensor
- 230: Anlage-Steuervorrichtung
- 240: Zusatz-Inertgas-Regelventil
- 250: Drei-Phasen-Abscheide-Einrichtung
- 260: Wärmepumpenvorrichtung
- 261: Wärmepumpenzuführleitung
- 262: Zulaufstelle
- 263: Rücklaufstelle
- 264: Wärmepumpe
- 265: Wärmepumpenabführleitung
- 266: Wärmeübertrager
- 267: Wärmepumpenregelventil
- 268: Zulauf-Regelventil
- 269: Rücklauf-Regelventil
- 270: Rotationsschlagvorrichtung
- 272: Rotationskörper
- 274: Schlagkette
- 276: Kettenende

## Patentansprüche

1. Kühlschrankrecyclinganlage (1) mit
- einer Kühlschrankzerkleinerungseinrichtung (10), die eine abgedichtete Prozesskammer (12) und eine in der Prozesskammer (12) angeordnete, mechanische Zerkleinerungsvorrichtung (20) zum mechanischen Zerkleinern eines Kühlschranks (22) hat,
- einer Inertgas-Quelle (30), optional einer Stickstoffgas-Quelle, die an die Prozesskammer (12) angeschlossen ist und von welcher der Prozesskammer (12) Inertgas, optional Stickstoffgas, zuführbar ist,
- einer Entfeuchtungs-Kühlvorrichtung (40), die über eine Prozessgasleitung (50) mit der Prozesskammer (12) verbunden ist, um aus der Prozesskammer (12) abgeführtes Prozessgas, welches aus dem mechanischen Zerkleinern des Kühlschranks (22) hervorgehendes Kohlenwasserstoffgas enthält, zu erhalten, und die eingerichtet ist, um das Prozessgas auf eine Entfeuchtungstemperatur, welche optional im Bereich von 5°-20° liegt, abzukühlen, sodass Wasser aus dem Prozessgas via Kondensation abgeschieden wird, um das Prozessgas zu entfeuchten,
- einem Verdichter (60), der stromabwärts von der Entfeuchtungs-Kühlvorrichtung (40) in der Prozessgasleitung (50) angeordnet ist und der eingerichtet ist, um das entfeuchtete Prozessgas zu verdichten, optional auf einen Druck im Bereich von 10-15 bar,
- einer Kühleinrichtung (70), die stromabwärts von dem Verdichter (60) in der Prozessgasleitung (50) angeordnet ist und die eingerichtet ist, um das verdichtete Prozessgas auf eine Abscheidungsbetriebstemperatur im Bereich von 5-15°C abzukühlen, um dadurch im Prozessgas enthaltenen Kohlenwasserstoff via Kondensation als flüssigen Kohlenwasserstoff abzuscheiden,
- einer Gas-Flüssigkeit-Trennvorrichtung (80), die stromabwärts von der Kühleinrichtung (70) in der Prozessgasleitung (50) angeordnet ist und die eingerichtet ist, um den aus dem verdichteten und abgekühlten Prozessgas abgeschiedenen, flüssigen Kohlenwasserstoff von dem verbleibenden Prozessgas zu trennen,
- einer Membranvorrichtung (90),
- welche über eine Prozessgasrückführleitung (100) mit der Gas-Flüssigkeit-Trennvorrichtung (80) verbunden ist, um das verbleibende Prozessgas zu erhalten,
- welche derart eingerichtet ist, dass von ihr aus dem verbleibenden Prozessgas auf einer Permeatseite (92) der Membranvorrichtung (90) ein kohlenwasserstoffangereichertes Rückführprozessgas und auf einer Retentatseite (94) der Membranvorrichtung (90) ein kohlenwasserstoffarmes Weiterführprozessgas erhalten wird,
- deren Permeatseite (92) über eine KW-Angereichertes-Gas-Rückführleitung (110) mit der Prozessgasleitung (50) an einer Rückführstelle (112) stromaufwärts von dem Verdichter (60), optional zwischen der Entfeuchtungs-Kühlvorrichtung (40) und dem Verdichter (60), verbunden ist, um das kohlenwasserstoffangereicherte Rückführprozessgas an dieser Rückführstelle (112) zu dem Prozessgas rückzuführen, um dessen Kohlenwasserstoffgehalt zu erhöhen, und
- deren Retentatseite (94) an eine KW-Armes-Gas-Weiterführleitung (120) angeschlossen ist, um das kohlenwasserstoffarme Weiterführprozessgas weiterzuführen.

2. Kühlschrankrecyclinganlage (1) gemäß Anspruch 1, wobei die Kühlschrankzerkleinerungseinrichtung (10) mit einer Heizvorrichtung (130) versehen ist, die mit der Prozesskammer (12) verbunden ist, um die Prozesskammer (12) auf eine Zerkleinerungsprozesstemperatur zu erwärmen, die optional in einem Bereich von 70° bis 80° liegt.

3. Kühlschrankrecyclinganlage (1) gemäß Anspruch 1 oder 2, wobei die mechanische Zerkleinerungsvorrichtung (20) eine Rotationsschlagvorrichtung (270) aufweist, welche einen oder mehrere Rotationskörper (272) aufweist, die in der Prozesskammer (12), optional am Boden der Prozesskammer (12), um eine Rotationsachse (A) drehantreibbar angeordnet sind, und die jeweils mit wenigstens einer Schlagkette (274) versehen sind, die mit einem Kettenende an dem Rotationskörper (276) außerhalb dessen Rotationsachse (A) befestigt ist und die ein anderes, freies Kettenende (268) hat, wobei die jeweilige Schlagkette (272) optional eine Länge in einem Bereich von 30-50cm hat, und wobei optional die jeweilige Schlagkette (272) als eine Ringkette ausgebildet ist.

4. Kühlschrankrecyclinganlage (1) gemäß einem der Ansprüche 1-3, wobei die Kühleinrichtung (70) einen ersten Kühleinrichtungs-Wärmetauscher (160) aufweist, welcher ferner in der Prozessgasrückführleitung (100) zwischen der Gas-Flüssigkeit-Trennvorrichtung (80) und der Membranvorrichtung (90) angeordnet ist und welcher eingerichtet ist, um das in der Prozessgasrückführleitung (100) vorliegende, verbleibende Prozessgas mit dem verdichteten Prozessgas Wärme tauschen zu lassen.

5. Kühlschrankrecyclinganlage (1) gemäß Anspruch 4, wobei die Kühleinrichtung (70) eine erste Kühleinrichtungs-Kühlvorrichtung (170) aufweist, die ein Kälteaggregat (172), einen zweiten Kühleinrichtungs-Wärmetauscher (174) und eine Kältemittelleitung (176) aufweist, welche das Kälteaggregat (172) und den zweiten Kühleinrichtungs-Wärmetauscher (174) miteinander verbindet und in welcher ein Kältemittel zirkuliert, das von dem Kälteaggregat (172) abkühlbar ist, wobei der zweite Kühleinrichtungs-Wärmetauscher (174) zwischen dem ersten Kühleinrichtungs-Wärmetauscher (160) und der Gas-Flüssigkeit-Trennvorrichtung (80) angeordnet ist und eingerichtet ist, um das Kältemittel mit dem verdichteten Prozessgas Wärme tauschen zu lassen, wobei optional die Entfeuchtungs-Kühlvorrichtung (40) als ein Entfeuchtungs-Wärmetauscher ausgebildet ist, der stromabwärts von dem zweiten Kühleinrichtungs-Wärmetauscher (174) in der Kältemittelleitung (176) angeordnet ist und eingerichtet ist, um das Kältemittel mit dem Prozessgas Wärme tauschen zu lassen, um das Prozessgas auf die Entfeuchtungstemperatur abzukühlen.

6. Kühlschrankrecyclinganlage (1) gemäß Anspruch 5, wobei die Kühleinrichtung (70) eine zweite Kühleinrichtungs-Kühlvorrichtung (180) aufweist, die einen Luftkühler (182) mit einem Kühlluftgebläse (186), einen dritten Kühleinrichtungs-Wärmetauscher (184) und eine Kühlmittelleitung (188) aufweist, welche den Luftkühler (182) und den dritten Kühleinrichtungs-Wärmetauscher (184) miteinander verbindet und in welcher ein Kühlmittel zirkuliert, das von dem Luftkühler (182) mittels des Kühlluftgebläses (186) luftkühlbar ist, wobei der dritte Kühleinrichtungs-Wärmetauscher (184) zwischen dem ersten Kühleinrichtungs-Wärmetauscher (184) und dem zweiten Kühleinrichtungs-Wärmetauscher (174) angeordnet ist und eingerichtet ist, um das Kühlmittel mit dem verdichteten Prozessgas Wärme tauschen zu lassen.

7. Kühlschrankrecyclinganlage (1) gemäß einem der Ansprüche 1-6,
- wobei die KW-Armes-Gas-Weiterführleitung (120) an die Prozesskammer (12) angeschlossen ist, sodass das kohlenwasserstoffarme Weiterführprozessgas der Prozesskammer (12) zuführbar ist,
und/oder
- wobei die KW-Armes-Gas-Weiterführleitung (120) an eine Druck-Wechsel-Adsorptions-Einrichtung (200) (DWA-Einrichtung) angeschlossen ist, welche zwei oder mehr Speicherbehälter (202) mit Aktivkohlematerial aufweist, wobei der im Weiterführprozessgas verbliebene Kohlenwasserstoff von dem Aktivkohlematerial adsorbiert werden kann, um dadurch im Wesentlichen kohlenwasserstofffreie Abluft zu generieren, die über eine an den jeweiligen Speicherbehälter (202) angeschlossene Abluftleitung (204) an die Umgebung abführbar ist und/oder die über eine Regenerationsleitung (206) jenem der Speicherbehälter (202) zuführbar ist, dessen Aktivkohlematerial zu regenerieren ist.

8. Kühlschrankrecyclinganlage (1) gemäß einem der Ansprüche 1-7, ferner mit einer Flüssigkeit-Flüssigkeit-Trennvorrichtung (190),
- welche entweder mit der Gas-Flüssigkeit-Trennvorrichtung (80, 82) integral ausgebildet ist oder welche über eine Flüssigkeitsabführleitung (192) mit der Gas-Flüssigkeit-Trennvorrichtung (80) verbunden ist, um von dieser den abgeschiedenen, flüssigen Kohlenwasserstoff zu erhalten, und
- welche eingerichtet ist, um verbleibendes Wasser von dem abgeschiedenen, flüssigen Kohlenwasserstoff zu trennen.

9. Kühlschrankrecyclinganlage (1) gemäß einem der Ansprüche 1-8, ferner mit einer Kleinmaterialabführeinrichtung (150), welche an die Prozesskammer (12) angeschlossen ist, um das durch die mechanische Zerkleinerungsvorrichtung (20) zerkleinerte Material (152) aus der Prozesskammer (12) abzuführen.

10. Kühlschrankrecyclinganlage (1) gemäß einem der Ansprüche 1-9, wobei die Inertgas-Quelle (30) und/oder die Retentatseite (94) der Membranvorrichtung (90) ferner über eine jeweilige Zusatz-Inertgas-Zuführleitung (210)
- mit der KW-Angereichertes-Gas-Rückführleitung (110) und/oder
- zwischen der Entfeuchtungs-Kühlvorrichtung (40) und dem Verdichter (60) mit der Prozessgasleitung (50) an einer zugeordneten Zusatz-Inertgas-Zuführstelle (212)
verbunden ist/sind, sodass über die zugeordnete Zusatz-Inertgas-Zuführstelle (212) Inertgas, das von der Inertgas-Quelle (30) stammt, und/oder KW-Angereichertes-Gas dem Prozessgas zuführbar ist, um den Sauerstoffgehalt im Prozessgas zu verringern, wobei in der Prozessgasleitung (50) ein Sauerstoffsensor (220) stromabwärts der jeweiligen Zusatz-Inertgas-Zuführstelle (212) angeordnet ist, um den Sauerstoffgehalt im Prozessgas zu erfassen, und wobei die Kühlschrankrecyclinganlage (1) ferner mit einer elektronischen Anlage-Steuervorrichtung (230) versehen ist, welche mit dem Sauerstoffsensor (220) sowie mit einem jeweiligen, in der jeweilig zugeordneten Zusatz-Inertgas-Zuführleitung (210) angeordneten Zusatz-Inertgas-Regelventil (240) elektrisch verbunden ist und welche eingerichtet ist, um auf Basis der vom Sauerstoffsensor (220) als elektrische Signale erhaltenden Sauerstoffgehalte das jeweilige Zusatz-Inertgas-Regelventil (240) so zu steuern, dass ein vorbestimmter Sauerstoffgehalt im Prozessgas auf Höhe des Sauerstoffsensors (220) eingestellt wird.

11. Kühlschrankrecyclinganlage (1) gemäß einem der Ansprüche 7-10 sofern in Kombination mit Anspruch 2 und 6, wobei die Heizvorrichtung (130) eine Wärmepumpenvorrichtung (260) aufweist, die aufweist:
- eine Wärmepumpenzuführleitung (261), welche über eine Zulaufstelle (262) sowie über eine Rücklaufstelle (263) an die Kühlmittelleitung (188) der zweiten Kühleinrichtungs-Vorrichtung (180) angeschlossen ist,
- eine Wärmepumpe (264), die an die Wärmepumpenzuführleitung (261) angeschlossen ist,
- eine Wärmepumpenabführleitung (265), welche an die Wärmepumpe (264) sowie an einen an der Prozesskammer (12) angeordneten Wärmeübertrager (266) der Heizvorrichtung (130) angeschlossen ist, mittels dessen die Wärme von der Wärmepumpe (264) an die Prozesskammer (12) übertragbar ist.

12. Verfahren (S300) zum Recyceln von Kühlschränken (22), optional mittels einer Kühlschrankrecyclinganlage (1) gemäß einem der Ansprüche 1-10, aufweisend die Schritte:
- Zuführen (S320), optional vereinzeltes Zuführen, der Kühlschränke (22) in eine Prozesskammer (12),
- Zuführen (S330) von Inertgas, optional von Stickstoffgas, in die Prozesskammer (12),
- mechanisches Zerkleinern (S350) des jeweiligen Kühlschranks (22) in der Prozesskammer (12),
- Abführen (S360) von in der Prozesskammer (12) vorliegendem Gas als Prozessgas aus der Prozesskammer (12) und Zuführen des Prozessgases an eine Entfeuchtungs-Kühlvorrichtung (40),
- Kühlen (S370) des Prozessgases mittels der Entfeuchtungs-Kühlvorrichtung (40) auf eine Temperatur, die optional im Bereich von 5-20°C liegt, um das Prozessgas zu entfeuchten via Kondensieren und Abscheiden von im Prozessgas enthaltenem Wasser,
- Verdichten (S390) des entfeuchteten Prozessgases mittels eines Verdichters (60), optional auf einen Druck im Bereich von 10-15 bar,
- Abkühlen (S400) des verdichteten Prozessgases in einer Kühleinrichtung (70) auf eine Abscheidungsbetriebstemperatur im Bereich von 5-15°C, um dadurch im Prozessgas enthaltenen Kohlenwasserstoff via Kondensation als flüssigen Kohlenwasserstoff abzuscheiden,
- Trennen (S410) des aus dem verdichteten und abgekühlten Prozessgas abgeschiedenen, flüssigen Kohlenwasserstoffs von dem verbleibenden Prozessgas mittels einer Gas-Flüssigkeit-Trennvorrichtung (80),
- Zuführen (S420) des verbleibenden Prozessgases zu einer Membranvorrichtung (90), von welcher aus dem verbleibenden Prozessgas auf einer Permeatseite (92) der Membranvorrichtung (90) ein kohlenwasserstoffangereichertes Rückführprozessgas und auf einer Retentatseite (94) der Membranvorrichtung (90) ein kohlenwasserstoffarmes Weiterführprozessgas erhalten wird,
- Rückführen (S430) des Rückführprozessgases an das Prozessgas in der Prozessgasleitung (50) an einer Rückführstelle (112) stromaufwärts von dem Verdichter (60), optional zwischen der Entfeuchtungs-Kühlvorrichtung (40) und dem Verdichter (60), um den Kohlenwasserstoffgehalt des Prozessgases zu erhöhen.

13. Verfahren (S300) gemäß Anspruch 12, ferner aufweisend
- Zusatz-Zuführen (S380) von Inertgas, optional von Stickstoffgas, und/oder des Weiterführungsprozessgases zu dem Prozessgas an einer zugeordneten Zusatz-Inertgas-Zuführstelle (212) zwischen dem Verdichter (60) und der Entfeuchtungs-Kühlvorrichtung (40), und/oder zu dem Rückführprozessgas an einer entsprechend zugeordneten Zusatz-Inertgas-Zuführstelle (212) in einer rückführgesteuerten Weise derart, dass der Sauerstoffgehalt des in den Verdichter (60) eintretenden Prozessgases kleiner gleich einer Sauerstoffgrenzkonzentration (SGK) für das Treibmittel, und optional
- rückführgesteuertes Beheizen (S340) der Prozesskammer (12), um darin eine vorbestimmte Zerkleinerungsprozesstemperatur, die optional im Bereich von 70-80° liegt, einzustellen.

14. Verfahren (S300) gemäß Anspruch 12 oder 13, ferner aufweisend
Entfernen (S310) von Kühlschrank-Kompressoren und optional Entfernen von Kühlschrank-Kältemittelleitungen von den Kühlschränken (22) vor dem Zuführen (S320) der Kühlschränke (22) in die Prozesskammer (12),
wobei die Kühlschränke (22) mit Ausnahme der entfernten Kühlschrank-Kompressoren und optional mit Ausnahme der entfernten Kühlschrank-Kältemittelleitungen ansonsten komplett so wie erhalten der Prozesskammer (12) zugeführt werden.

15. Verfahren (S300) gemäß einem der Ansprüche 12-14, wobei das mechanische Zerkleinern derart erfolgt, dass in den Kühlschränken (22) vorliegendes, geschäumtes Dämmmaterial zu Partikeln in einer Größe von maximal 2mm Umkreisdurchmesser, optional von maximal 1mm Umkreisdurchmesser, zerkleinert wird.

## Claims

1. Refrigerator recycling plant (1) with
- a refrigerator shredding device (10) which has a sealed process chamber (12) and a mechanical shredding device (20) arranged in the process chamber (12) for mechanically shredding a refrigerator (22),
- an inert gas source (30), optionally a nitrogen gas source, which is connected to the process chamber (12) and from which inert gas, optionally nitrogen gas, can be supplied to the process chamber (12),
- a dehumidification cooling device (40) connected to the process chamber (12) via a process gas line (50) in order to obtain process gas discharged from the process chamber (12), which contains hydrocarbon gas resulting from the mechanical shredding of the refrigerator (22), and which is configured to cool the process gas to a dehumidification temperature, which is optionally in the range of 5°-20°, so that water is separated from the process gas via condensation in order to dehumidify the process gas,
- a compressor (60) arranged downstream of the dehumidification cooling device (40) in the process gas line (50) and configured to compress the dehumidified process gas, optionally to a pressure in the range of 10-15 bar,
- a cooling device (70) arranged downstream of the compressor (60) in the process gas line (50) and configured to cool the compressed process gas to a separation operating temperature in the range of 5-15°C, to thereby separate hydrocarbon, contained in the process gas, as liquid hydrocarbon via condensation,
- a gas-liquid separation device (80) arranged downstream of the cooling device (70) in the process gas line (50) and configured to separate the liquid hydrocarbon separated from the compressed and cooled process gas from the remaining process gas,
- a membrane device (90),
- which is connected to the gas-liquid separation device (80) via a process gas return line (100) in order to obtain the remaining process gas,
- which is configured such that it obtains, from the remaining process gas, a hydrocarbon-enriched return process gas on a permeate side (92) of the membrane device (90) and a low-hydrocarbon forward process gas on a retentate side (94) of the membrane device (90),
- whose permeate side (92) is connected via a hydrocarbon-enriched gas return line (110) to the process gas line (50) at a return point (112) upstream of the compressor (60), optionally between the dehumidification cooling device (40) and the compressor (60), in order to return the hydrocarbon-enriched return process gas to the process gas at this return point (112) in order to increase hydrocarbon content thereof, and
- whose retentate side (94) is connected to a low-hydrocarbon gas forward line (120) to forward the low-hydrocarbon forward process gas.

2. Refrigerator recycling plant (1) according to claim 1, wherein the refrigerator shredding device (10) is provided with a heating device (130) connected to the process chamber (12) to heat the process chamber (12) to a shredding process temperature optionally in the range of 70° to 80°.

3. Refrigerator recycling plant (1) according to claim 1 or 2, wherein the mechanical shredding device (20) has a rotary impact device (270) which has one or more rotary bodies (272) which are arranged in the process chamber (12), optionally at the bottom of the process chamber (12), to be rotatably driven about a rotational axis (A) and are each provided with at least one impact chain (274) which is attached with one chain end to the rotating body (276) outside its rotational axis (A) and has another, free chain end (268), wherein the respective impact chain (272) optionally has a length in a range of 30-50 cm, and wherein the respective impact chain (272) is optionally designed as a ring chain.

4. Refrigerator recycling plant (1) according to one of claims 1-3, wherein the cooling device (70) has a first cooling device heat exchanger (160), which is furthermore arranged in the process gas return line (100) between the gas-liquid separation device (80) and the membrane device (90) and which is configured to allow the remaining process gas present in the process gas return line (100) to exchange heat with the compressed process gas.

5. Refrigerator recycling plant (1) according to claim 4, wherein the cooling device (70) comprises a first cooling device cooling apparatus (170) which has a refrigeration unit (172), a second cooling device heat exchanger (174) and a refrigerant line (176) connecting the refrigeration unit (172) and the second cooling device heat exchanger (174) to each other and in which a refrigerant circulates which can be cooled by the refrigeration unit (172), wherein the second cooling device heat exchanger (174) is arranged between the first cooling device heat exchanger (160) and the gas-liquid separation device (80) and is configured to allow the refrigerant to exchange heat with the compressed process gas, wherein, optionally, the dehumidification cooling device (40) is designed as a dehumidification heat exchanger, which is arranged downstream of the second cooling device heat exchanger (174) in the refrigerant line (176) and is configured to allow the refrigerant to exchange heat with the process gas in order to cool the process gas to the dehumidification temperature.

6. Refrigerator recycling plant (1) according to claim 5, wherein the cooling device (70) comprises a second cooling device cooling apparatus (180) comprising an air cooler (182) with a cooling air fan (186), a third cooling device heat exchanger (184) and a coolant line (188) which connects the air cooler (182) and the third cooling device heat exchanger (184) to each other and in which a coolant circulates which is air-coolable by the air cooler (182) by means of the cooling air fan (186), wherein the third cooling device heat exchanger (184) is arranged between the first cooling device heat exchanger (184) and the second cooling device heat exchanger (174) and is configured to allow the coolant to exchange heat with the compressed process gas.

7. Refrigerator recycling plant (1) according to one of claims 1-6,
- wherein the low-hydrocarbon gas forward line (120) is connected to the process chamber (12) so that the low-hydrocarbon forward process gas can be supplied to the process chamber (12),
and/or
- wherein the low-hydrocarbon gas forward line (120) is connected to a pressure swing adsorption device (200) (DWA device) which has two or more storage containers (202) with activated carbon material, wherein the hydrocarbon remaining in the forward process gas can be adsorbed by the activated carbon material, to thereby generate substantially hydrocarbon-free exhaust air which can be discharged to the environment via an exhaust air line (204) connected to the respective storage container (202) and/or can be fed via a regeneration line (206) to that of the storage containers (202) whose activated carbon material is to be regenerated.

8. Refrigerator recycling plant (1) according to one of claims 1-7, further comprising a liquid-liquid separation device (190),
- which is either integrally formed with the gas-liquid separation device (80, 82) or which is connected to the gas-liquid separation device (80) via a liquid discharge line (192) in order to receive the separated liquid hydrocarbon from the latter, and
- which is configured to separate residual water from the separated liquid hydrocarbon.

9. Refrigerator recycling plant (1) according to one of claims 1-8, further comprising a small material discharge device (150) which is connected to the process chamber (12) in order to discharge the material (152) shredded by the mechanical shredding device (20) from the process chamber (12).

10. Refrigerator recycling plant (1) according to one of claims 1-9, wherein the inert gas source (30) and/or the retentate side (94) of the membrane device (90) is/are further connected via a respective additional inert gas supply line (210)
- with the hydrocarbon-enriched gas return line (110)
and/or
- between the dehumidification cooling device (40) and the compressor (60) with the process gas line (50) at an
associated additional inert gas supply point (212), so that inert gas originating from the inert gas source (30) and/or hydrocarbon-enriched gas can be supplied to the process gas via the associated additional inert gas supply point (212) in order to reduce the oxygen content in the process gas, wherein an oxygen sensor (220) is arranged in the process gas line (50) downstream of the respective additional inert gas supply point (212) in order to detect the oxygen content in the process gas, and wherein the refrigerator recycling plant (1) is further provided with an electronic plant control device (230) which is electrically connected to the oxygen sensor (220) and to a respective additional inert gas control valve (240) arranged in the respectively associated additional inert gas supply line (210), and which is configured to control the respective additional inert gas control valve (240) on the basis of the oxygen contents received as electrical signals from the oxygen sensor (220) in such a way that a predetermined oxygen content in the process gas is set at the level of the oxygen sensor (220).

11. Refrigerator recycling plant (1) according to one of claims 7-10, provided that in combination with claims 2 and 6, wherein the heating device (130) comprises a heat pump device (260) which comprises:
- a heat pump supply line (261) connected to the coolant line (188) of the second cooling device apparatus (180) via a supply point (262) and a return point (263),
- a heat pump (264) connected to the heat pump supply line (261),
- a heat pump discharge line (265) connected to the heat pump (264) and to a heat transferring device (266), arranged on the process chamber (12), of the heating device (130), by means of which the heat from the heat pump (264) can be transferred to the process chamber (12).

12. Method (S300) for recycling refrigerators (22), optionally by means of a refrigerator recycling plant (1) according to one of claims 1-10, comprising the steps of:
- feeding (S320), optionally individually feeding, the refrigerators (22) into a process chamber (12),
- supplying (S330) inert gas, optionally nitrogen gas, into the process chamber (12),
- mechanically shredding (S350) the respective refrigerator (22) in the process chamber (12),
- discharging (S360) gas present in the process chamber (12) as process gas from the process chamber (12) and feeding the process gas to a dehumidifying cooling device (40),
- cooling (S370) the process gas by means of the dehumidifying cooling device (40) to a temperature that is optionally in the range of 5-20°C in order to dehumidify the process gas via condensation and separation of water contained in the process gas,
- compressing (S390) the dehumidified process gas by means of a compressor (60), optionally to a pressure in the range of 10-15 bar,
- cooling (S400) the compressed process gas in a cooling device (70) to a separation operating temperature in the range of 5-15°C, to thereby separate hydrocarbon, contained in the process gas, as liquid hydrocarbon via condensation,
- separating (S410) the liquid hydrocarbon separated from the compressed and cooled process gas from the remaining process gas by means of a gas-liquid separation device (80),
- feeding (S420) the remaining process gas to a membrane device (90), by which, from the remaining process gas, a hydrocarbon-enriched return process gas is obtained on a permeate side (92) of the membrane device (90) and a low-hydrocarbon forward process gas is obtained on a retentate side (94) of the membrane device (90),
- returning (S430) the return process gas to the process gas in the process gas line (50) at a return point (112) upstream of the compressor (60), optionally between the dehumidification cooling device (40) and the compressor (60), in order to increase the hydrocarbon content of the process gas.

13. Method (S300) according to claim 12, further comprising
- additionally supplying (S380) inert gas, optionally nitrogen gas, and/or the forward process gas to the process gas at an associated additional inert gas supply point (212) between the compressor (60) and the dehumidifying cooling device (40), and/or to the return process gas at a correspondingly assigned additional inert gas feed point (212) in a feedback-controlled manner such that the oxygen content of the process gas entering the compressor (60) is less than or equal to an oxygen limit concentration (SGK) for the expanding agent, and optionally
- feedback-controlled heating (S340) of the process chamber (12) in order to set a predetermined shredding process temperature therein, which is optionally in the range of 70-80°.

14. Method (S300) according to claim 12 or 13, further comprising removing (S310) refrigerator compressors and optionally removing refrigerator refrigerant lines from the refrigerators (22) before feeding (S320) the refrigerators (22) into the process chamber (12),
wherein the refrigerators (22), with the exception of the removed refrigerator compressors and optionally with the exception of the removed refrigerator refrigerant lines, are otherwise fed into the process chamber (12) completely as received.

15. Method (S300) according to one of claims 12-14, wherein the mechanical shredding is carried out in such a way that foamed insulation material present in the refrigerators (22) is shredded into particles with a size having a maximum circumscribed circle diameter of 2 mm, optionally with a maximum circumscribed circle diameter of 1 mm.

## Revendications

1. Installation de recyclage de réfrigérateur (1), comprenant :
- un dispositif de broyage de réfrigérateur (10) qui comporte une chambre de traitement étanche (12) et un dispositif de broyage mécanique (20) disposé dans la chambre de traitement (12) pour broyer mécaniquement un réfrigérateur (22),
- une source de gaz inerte (30), éventuellement une source de gaz d'azote, qui est reliée à la chambre de traitement (12) et à partir de laquelle du gaz inerte, éventuellement du gaz d'azote, peut être alimenté à la chambre de traitement (12),
- un dispositif de refroidissement-déshumidification (40) relié à la chambre de traitement (12) via une conduite de gaz de traitement (50) afin d'obtenir du gaz de traitement évacué de la chambre de traitement (12), qui contient du gaz hydrocarboné résultant du broyage mécanique du réfrigérateur (22), et qui est configuré pour refroidir le gaz de traitement à une température de déshumidification, qui est éventuellement comprise dans la plage de 5° à 20°, de sorte que l'eau est séparée du gaz de traitement par condensation afin de déshumidifier le gaz de traitement,
- un compresseur (60) disposé en aval du dispositif de refroidissement-déshumidification (40) dans la conduite de gaz de traitement (50) et configuré pour comprimer le gaz de traitement déshumidifié, éventuellement à une pression dans une plage de 10 à 15 bars,
- un dispositif de refroidissement (70) disposé en aval du compresseur (60) dans la conduite de gaz de traitement (50) et configuré pour refroidir le gaz de traitement comprimé à une température de fonctionnement de séparation dans une plage de 5 à 15°, afin de séparer ainsi l'hydrocarbure contenu dans le gaz de traitement sous forme d'hydrocarbure liquide par condensation,
- un dispositif de séparation gaz-liquide (80) disposé en aval du dispositif de refroidissement (70) dans la conduite de gaz de traitement (50) et configuré pour séparer l'hydrocarbure liquide séparé du gaz de traitement comprimé et refroidi du gaz de traitement restant,
- un dispositif à membrane (90),
- qui est relié au dispositif de séparation gaz-liquide (80) via une conduite de retour de gaz de traitement (100) afin d'obtenir le gaz de traitement restant,
- qui est configuré de manière à obtenir, à partir du gaz de traitement restant, un gaz de traitement de retour enrichi en hydrocarbures sur un côté perméat (92) du dispositif à membrane (90) et un gaz de traitement d'avance à faible teneur en hydrocarbures sur un côté rétentat (94) du dispositif à membrane (90),
- dont le côté perméat (92) est relié via une conduite de retour de gaz enrichi en hydrocarbures (110) à la conduite de gaz de traitement (50) en un point de retour (112) en amont du compresseur (60), éventuellement entre le dispositif de refroidissement-déshumidification (40) et le compresseur (60), afin de renvoyer le gaz de traitement de retour enrichi en hydrocarbures vers le gaz de traitement à ce point de retour (112) afin d'augmenter sa teneur en hydrocarbures, et
- dont le côté rétentat (94) est relié à une conduite d'avance de gaz à faible teneur en hydrocarbures (120) pour faire avancer le gaz de traitement d'avance à faible teneur en hydrocarbures.

2. Installation de recyclage de réfrigérateur (1) selon la revendication 1, dans laquelle le dispositif de broyage de réfrigérateur (10) est muni d'un dispositif de chauffage (130) relié à la chambre de traitement (12) pour chauffer la chambre de traitement (12) à une température de processus de broyage éventuellement comprise dans une plage de 70° à 80°.

3. Installation de recyclage de réfrigérateur (1) selon la revendication 1 ou 2, dans laquelle le dispositif de broyage mécanique (20) comporte un dispositif à impact rotatif (270) qui comporte un ou plusieurs corps rotatifs (272) qui sont disposés dans la chambre de traitement (12), éventuellement au fond de la chambre de traitement (12), pour être entraînés en rotation autour d'un axe de rotation (A) et sont chacun pourvus d'au moins une chaîne d'impact (274) qui est fixée par une extrémité de chaîne au corps rotatif (276) à l'extérieur de son axe de rotation (A) et comporte une autre extrémité de chaîne libre (268), dans laquelle la chaîne d'impact respective (272) a éventuellement une longueur dans une plage de 30 à 50 cm, et dans laquelle la chaîne d'impact respective (272) est éventuellement conçue comme une chaîne à maillons.

4. Installation de recyclage de réfrigérateur (1) selon l'une des revendications 1 à 3, dans laquelle le dispositif de refroidissement (70) comporte un premier échangeur de chaleur de dispositif de refroidissement (160), qui est en outre disposé dans la conduite de retour de gaz de traitement (100) entre le dispositif de séparation gaz-liquide (80) et le dispositif à membrane (90) et qui est configuré pour permettre au gaz de traitement restant présent dans la conduite de retour de gaz de traitement (100) d'échanger de la chaleur avec le gaz de traitement comprimé.

5. Installation de recyclage de réfrigérateur (1) selon la revendication 4, dans laquelle le dispositif de refroidissement (70) comprend un premier appareil de refroidissement de dispositif de refroidissement (170) qui comporte une unité de réfrigération (172), un deuxième échangeur de chaleur de dispositif de refroidissement (174) et une conduite de réfrigérant (176) reliant l'unité de réfrigération (172) et le deuxième échangeur de chaleur de dispositif de refroidissement (174) entre eux et dans laquelle circule un réfrigérant qui peut être refroidi par l'unité de réfrigération (172), dans laquelle le deuxième échangeur de chaleur de dispositif de refroidissement (174) est disposé entre le premier échangeur de chaleur de dispositif de refroidissement (160) et le dispositif de séparation gaz-liquide (80) et est configuré pour permettre au réfrigérant d'échanger de la chaleur avec le gaz de traitement comprimé, dans laquelle, en option, le dispositif de refroidissement-déshumidification (40) est conçu comme un échangeur de chaleur par déshumidification, qui est disposé en aval du deuxième échangeur de chaleur de dispositif de refroidissement (174) dans la conduite de réfrigérant (176) et est configuré pour permettre au réfrigérant d'échanger de la chaleur avec le gaz de traitement afin de refroidir le gaz de traitement à la température de déshumidification.

6. Installation de recyclage de réfrigérateur (1) selon la revendication 5, dans laquelle le dispositif de refroidissement (70) comprend un deuxième appareil de refroidissement de dispositif de refroidissement (180) comprenant un refroidisseur d'air (182) avec un ventilateur d'air de refroidissement (186), un troisième échangeur de chaleur de dispositif de refroidissement (184) et une conduite de liquide de refroidissement (188) qui relie le refroidisseur d'air (182) et le troisième échangeur de chaleur de dispositif de refroidissement (184) l'un à l'autre et dans laquelle circule un liquide de refroidissement qui peut être refroidi par l'air par le refroidisseur d'air (182) au moyen du ventilateur d'air de refroidissement (186), dans laquelle le troisième échangeur de chaleur de dispositif de refroidissement (184) est disposé entre le premier échangeur de chaleur de dispositif de refroidissement (184) et le deuxième échangeur de chaleur de dispositif de refroidissement (174) et est configuré pour permettre au liquide de refroidissement d'échanger de la chaleur avec le gaz de traitement comprimé.

7. Installation de recyclage de réfrigérateur (1) selon l'une des revendications 1 à 6,
- dans laquelle la conduite d'avance de gaz à faible teneur en hydrocarbures (120) est reliée à la chambre de traitement (12) de manière à ce que le gaz de traitement d'avance à faible teneur en hydrocarbures puisse être alimenté à la chambre de traitement (12),
et/ou
- dans laquelle la conduite d'avance de gaz à faible teneur en hydrocarbures (120) est reliée à un dispositif d'adsorption à pression alternée (200) (dispositif DWA) qui comporte deux ou plusieurs conteneurs de stockage (202) avec un matériau à charbon actif, dans laquelle les hydrocarbures restant dans le gaz de traitement d'avance peuvent être adsorbés par le matériau à charbon actif, afin de générer ainsi un air d'échappement pratiquement exempt d'hydrocarbures qui peut être évacué dans l'environnement via une conduite d'air d'échappement (204) raccordée au conteneur de stockage (202) respectif et/ou peut être alimenté via une conduite de régénération (206) à celui des conteneurs de stockage (202) dont le matériau à charbon actif doit être régénéré.

8. Installation de recyclage de réfrigérateur (1) selon l'une quelconque des revendications 1 à 7, comprenant en outre un dispositif de séparation liquide-liquide (190),
- qui est soit formé d'un seul tenant avec le dispositif de séparation gaz-liquide (80, 82), soit relié au dispositif de séparation gaz-liquide (80) via une conduite d'évacuation de liquide (192) afin de recevoir l'hydrocarbure liquide séparé provenant de ce dernier, et
- qui est configuré pour séparer l'eau résiduelle de l'hydrocarbure liquide séparé.

9. Installation de recyclage de réfrigérateur (1) selon l'une des revendications 1 à 8, comprenant en outre un dispositif de décharge de petits matériaux (150) qui est relié à la chambre de traitement (12) afin de décharger les matériaux (152) broyés par le dispositif de broyage mécanique (20) de la chambre de traitement (12).

10. Installation de recyclage de réfrigérateur (1) selon l'une des revendications 1 à 9, dans laquelle la source de gaz inerte (30) et/ou le côté rétentat (94) du dispositif à membrane (90) est/sont en outre reliés via une conduite d'alimentation en gaz inerte supplémentaire respective (210)
- à la conduite de retour de gaz enrichi en hydrocarbures (110) et/ou
- entre le dispositif de refroidissement par déshumidification (40) et le compresseur (60) à la conduite de gaz de traitement (50) au niveau d'un point d'alimentation en gaz inerte supplémentaire associé (212),
de sorte que le gaz inerte provenant de la source de gaz inerte (30) et/ou le gaz enrichi en hydrocarbures puisse être alimenté au gaz de traitement via le point d'alimentation en gaz inerte supplémentaire associé (212) afin de réduire la teneur en oxygène dans le gaz de traitement, dans laquelle un capteur d'oxygène (220) est disposé dans la conduite de gaz de traitement (50) en aval du point d'alimentation en gaz inerte supplémentaire associé (212) afin de détecter la teneur en oxygène dans le gaz de traitement, et dans laquelle l'installation de recyclage de réfrigérateur (1) est en outre équipée d'un dispositif électronique de commande d'installation (230) qui est connecté électriquement au capteur d'oxygène (220) et à une vanne de régulation de gaz inerte supplémentaire respective (240) disposée dans la conduite d'alimentation en gaz inerte supplémentaire associée respective (210), et qui est configuré pour commander la vanne de régulation de gaz inerte supplémentaire respective (240) sur la base des teneurs en oxygène reçues sous forme de signaux électriques provenant du capteur d'oxygène (220) de telle manière qu'une teneur en oxygène prédéterminée dans le gaz de traitement soit réglée au niveau du capteur d'oxygène (220).

11. Installation de recyclage de réfrigérateur (1) selon l'une des revendications 7 à 10, à condition qu'en combinaison avec les revendications 2 et 6, dans laquelle le dispositif de chauffage (130) comprend un dispositif à pompe à chaleur (260), comprenant :
- une conduite d'alimentation de pompe à chaleur (261) reliée à la conduite de liquide de refroidissement (188) du deuxième appareil de dispositif de refroidissement (180) via un point d'alimentation (262) et un point de retour (263),
- une pompe à chaleur (264) reliée à la conduite d'alimentation de pompe à chaleur (261),
- une conduite d'évacuation de pompe à chaleur (265) reliée à la pompe à chaleur (264) et à un dispositif de transfert de chaleur (266), disposé sur la chambre de traitement (12), du dispositif de chauffage (130), au moyen duquel la chaleur provenant de la pompe à chaleur (264) peut être transférée à la chambre de traitement (12).

12. Procédé (S300) de recyclage de réfrigérateurs (22), éventuellement au moyen d'une installation de recyclage de réfrigérateur (1) selon l'une des revendications 1 à 10, comprenant les étapes suivantes :
- l'alimentation (S320), éventuellement l'alimentation individuel, des réfrigérateurs (22) dans une chambre de traitement (12),
- l'alimentation (S330) de gaz inerte, éventuellement de gaz d'azote, dans la chambre de traitement (12),
- le broyage mécanique (S350) du réfrigérateur respectif (22) dans la chambre de traitement (12),
- l'évacuation (S360) de gaz présent dans la chambre de traitement (12) en tant que gaz de traitement de la chambre de traitement (12) et l'alimentation du gaz de traitement vers un dispositif de refroidissement-déshumidification (40),
- le refroidissement (S370) du gaz de traitement au moyen du dispositif de refroidissement-déshumidification (40) à une température qui est éventuellement dans une plage de 5° à 20° afin de déshumidifier le gaz de traitement par condensation et séparation d'eau contenue dans le gaz de traitement,
- la compression (S390) du gaz de traitement déshumidifié au moyen d'un compresseur (60), éventuellement à une pression dans une plage de 10 à 15 bars,
- le refroidissement (S400) du gaz de traitement comprimé dans un dispositif de refroidissement (70) à une température de fonctionnement de séparation dans une plage de 5° à 15°, afin de séparer ainsi l'hydrocarbure contenu dans le gaz de traitement sous forme d'hydrocarbure liquide par condensation,
- la séparation (S410) de l'hydrocarbure liquide séparé du gaz de traitement comprimé et refroidi du gaz de traitement restant au moyen d'un dispositif de séparation gaz-liquide (80),
- l'alimentation (S420) du gaz de traitement restant vers un dispositif à membrane (90), par lequel, à partir du gaz de traitement restant, un gaz de traitement de retour enrichi en hydrocarbures est obtenu sur un côté perméat (92) du dispositif à membrane (90) et un gaz de traitement d'avance à faible teneur en hydrocarbures est obtenu sur un côté rétentat (94) du dispositif à membrane (90),
- le retour (S430) du gaz de traitement de retour vers le gaz de traitement dans la conduite de gaz de traitement (50) à un point de retour (112) en amont du compresseur (60), éventuellement entre le dispositif de refroidissement-déshumidification (40) et le compresseur (60), afin d'augmenter la teneur en hydrocarbures du gaz de traitement.

13. Procédé (S300) selon la revendication 12, comprenant en outre :
- l'alimentation supplémentaire (S380) en gaz inerte, éventuellement en gaz d'azote, et/ou en gaz de traitement d'avance au gaz de traitement à un point d'alimentation en gaz inerte supplémentaire associé (212) entre le compresseur (60) et le dispositif de refroidissement-déshumidification (40), et/ou au gaz de traitement de retour à un point d'alimentation en gaz inerte supplémentaire (212) attribué de manière correspondante, de manière contrôlée par rétroaction, de telle sorte que la teneur en oxygène du gaz de traitement entrant dans le compresseur (60) soit inférieure ou égale à une concentration limite d'oxygène (SGK) pour l'agent d'expansion, et éventuellement
- le chauffage contrôlé par rétroaction (S340) de la chambre de traitement (12) afin d'y régler une température de traitement de broyage prédéterminée, qui se situe éventuellement dans la plage de 70° à 80°.

14. Procédé (S300) selon la revendication 12 ou 13, comprenant en outre
l'enlèvement (S310) de compresseurs de réfrigérateur et, éventuellement, l'enlèvement de conduites de réfrigérant de réfrigérateur des réfrigérateurs (22) avant l'alimentation (S320) des réfrigérateurs (22) dans la chambre de traitement (12),
dans lequel les réfrigérateurs (22), à l'exception des compresseurs de réfrigérateur enlevés et éventuellement à l'exception des conduites de réfrigérant de réfrigérateur enlevées, sont autrement alimentés dans la chambre de traitement (12) complètement tels quels.

15. Procédé (S300) selon l'une des revendications 12 à 14, dans lequel le broyage mécanique est effectué de telle manière que le matériau isolant en mousse présent dans les réfrigérateurs (22) est broyé en particules ayant une taille avec un diamètre maximal du cercle circonscrit de 2 mm, éventuellement avec un diamètre maximal du cercle circonscrit de 1 mm.
